# EUROPÄISCHE PATENTSCHRIFT

(11) **EP 3 484 970 B1**
(45) Veröffentlichungstag und Bekanntmachung des Hinweises auf die Patenterteilung: **08.07.2020**
(21) Anmeldenummer: 17736974.1
(22) Anmeldetag: 13.07.2017
(51) Int. Cl.: C09D 183/06, C09D 183/14

(54) **ZUSAMMENSETZUNG FÜR SILIKONKAUTSCHUKMASSEN**
COMPOSITION FOR SILICONE RUBBER MASSES
COMPOSITIONS POUR MASSES EN CAOUTCHOUC SILICONE

(30) Priorität: 13.07.2016 EP 16179308
(43) Veröffentlichungstag der Anmeldung: 22.05.2019
(73) Patentinhaber: Nitrochemie Aschau GmbH, 84544 Aschau am Inn (DE)
(72) Erfinder: LANGERBEINS, Klaus, 50259 Pulheim (DE); PICHL, Ulrich, 84544 Aschau am Inn (DE); KRUPP, Alexis, 84478 Waldkaiburg (DE); SCHMIDT, Gerhard, 84453 Mühldorf (DE)
(74) Vertreter: Müller Schupfner & Partner Patent- und Rechtsanwaltspartnerschaft mbB
(86) Internationale Anmeldenummer: PCT/EP2017/067740
(87) Internationale Veröffentlichungsnummer: WO 2018/011360

(56) Entgegenhaltungen:
- EP-A1- 2 030 976
- EP-A1- 2 774 672
- WO-A1-2012/064611
- WO-A2-2008/118459
- WO-A2-2015/082408
- DE-A1- 2 454 408
- DE-A1- 10 103 421

## Beschreibung

Die Erfindung betrifft eine Zusammensetzung enthaltend einen Härter für Silikonkautschukmassen und einen Haftvermittler, Dichtungsmittel, Klebstoffe oder Beschichtungsmittel enthaltend diese Zusammensetzung, die Verwendung dieser Zusammensetzung als Dichtungsmittel, Klebstoff, Vergussmasse oder Beschichtungsmittel und die Verwendung eines erfindungsgemäßen Haftvermittlers als Haftvermittler in Silikonkautschukmassen.

Kalthärtende Silikonkautschukmassen, auch RTV-(Raumtemperaturvernetzende)-Silikonkautschukmassen genannt, sind als maßgeschneiderte Werkstoffe mit elastischen Eigenschaften bekannt. Sie finden breite Anwendung als Dichtstoffe, als Fugenmaterial oder als Klebstoffe für Glas, Porzellan, Keramik, Stein, Kunststoffe, Metalle, Holz etc., vor allem im Sanitärbereich, im Hochbau oder als Beschichtungsmaterialien. Bevorzugt kommen kalthärtende Silikonkautschukmassen als Einkomponenten-RTV-Siliconkautschukmassen (RTV-1) zum Einsatz. Derartige Silikonkautschukmassen sind üblicherweise plastisch verformbare Mischungen aus Polyorganosiloxanen mit funktionellen Gruppen und geeigneten Vernetzungsmitteln, insbesondere geeigneten Härtern, die unter Feuchtigkeitsausschluss aufbewahrt werden. Diese Mischungen vernetzen unter dem Einfluss von Wasser oder Luftfeuchtigkeit bei Raumtemperatur. Dieser Vorgang wird üblicherweise auch als Aushärten bezeichnet. Die dabei eingesetzten Härter werden häufig auch als Vernetzer bezeichnet.

Die Eigenschaften der ausgehärteten Silikonkautschukmassen werden dabei maßgeblich durch die verwendeten Polyorganosiloxane und die verwendeten Härter bestimmt.

Beispielsweise kann in Abhängigkeit der Verwendung von tri- und/oder tetrafunktionalen Härtern der Vernetzungsgrad der ausgehärteten Silikonkautschukmasse gesteuert werden. Der Vernetzungsgrad hat einen erheblichen Einfluss auf z.B. die Lösemittelresistenz der ausgehärteten Silikonkautschukmasse. Auch die verwendeten Polyorganosiloxane haben einen Einfluss auf den Vernetzungsgrad, insbesondere über die Anzahl der funktionellen Gruppen, die sie tragen. Besonders häufig werden jedoch alpha,omega-Dihydroxypolyorganosiloxane eingesetzt.

Beim Aushärten verknüpfen sich die Polyorganosiloxane mit den Härtern. Im Zuge des Aushärtens werden am Härter befindliche, geeignete Abgangsgruppen vom Härter abgespalten. Die Verknüpfung mit den Polyorganosiloxanen erfolgt über funktionellen Gruppen der Polyorganosiloxane, insbesondere über deren OH-Gruppen. Anhand der freigesetzten Abgangsgruppen, die die Härter tragen, werden zwischen sauren (Säuren als Abgangsgruppe, wie z.B. Essigsäure), basischen (Amine als Abgangsgruppen) und neutralen (Alkohole oder Oxime als Abgangsgruppen) Härtern bzw. RTV-1-Systemen unterschieden.

Aufgrund der von sauren und basischen RTV-1-Kautschukmassen bei der Vernetzung freigesetzten aggressiven Verbindungen, die unter anderem Metalle, Stein oder Mörtel schädigen können, werden heutzutage bevorzugt RTV-1-Kautschukmassen eingesetzt, die bei der Vernetzung neutrale Abgangsgruppen freisetzen, also neutralvernetzend sind. Besonders häufig wird dabei auf Härter auf Alkoxysilan-Basis zurückgegriffen, die beispielsweise Ethanol oder Methanol als Abgangsgruppen aufweisen. RTV-1-Systeme mit Alkoxyvernetzern weisen jedoch häufig Probleme bei der Lagerstabilität sowie bezüglich der Haftung der ausgehärteten Silikonkautschukmasse auf. Ebenfalls werden häufig Härter auf Oxim-Basis eingesetzt, die unter Abgabe eines Oxims, z.B. eines Alkanonoxims wie Butan-2-onoxim hydrolysieren. Nachteilig an den Härtern auf Oxim-Basis ist, dass sie negative toxikologische Eigenschaften aufweisen können. Insbesondere steht Butan-2-onoxim nach neueren Erkenntnissen im Verdacht, Krebs erzeugen zu können.

Ferner weisen praktisch alle angeführten, üblicherweise verwendeten Härter den Nachteil auf, dass von den entsprechenden RTV-1-Systeme beim Aushärten eine erhebliche Geruchsbelastung ausgeht. Diese Geruchsbelastung kann teilweise auch gesundheitliche Nachteile nach sich ziehen. Insbesondere bei der Verwendung der entsprechenden RTV-1-Systeme in geschlossenen Räumen ergibt sich eine starke Belastung der Anwender durch die mitunter übel riechenden Abgangsgruppen.

Die Hafteigenschaften der Silikonkautschukmassen auf verschiedenen Untergründen werden maßgeblich durch die eingesetzten Haftvermittler bestimmt. Als Haftvermittler kommen dabei üblicherweise Substanzen zum Einsatz, die sowohl mit der Silikonkautschukmasse als auch mit dem Untergrund in Wechselwirkung treten können. Dies wird zum Beispiel über Verbindungen erreicht, die eine Silangruppe und eine weitere, reaktive funktionelle Gruppe tragen. Mitunter werden Organosilane mit reaktiven Amin-, Carbonsäure-, Epoxy- oder Thiolgruppen eingesetzt. Dabei tritt die reaktive funktionelle Gruppe mit dem Untergrund in Wechselwirkung. Organosilane mit reaktiven Amingruppen werden dabei besonders häufig eingesetzt, beispielsweise in Form von Butylaminopropyltriethoxysilan.

Eine wichtige Eigenschaft von Silikonkautschukmassen (z.B. Dicht- oder Klebstoffen) ist ihre Lagerstabilität. Eine hohe Lagerstabilität der Silikonkautschukmassen ist dabei wünschenswert. Die Kompatibilität der Bestandteile einer Silikonkautschukmasse hat dabei Einfluss auf ihre Lagerstabilität.

Neben den oben angeführten Haftvermittlern sind im Stand der Technik auch andere Haftvermittler bekannt.

In der US 4 100 129 werden Cyanursäurederivate als Haftvermittler in Zusammensetzungen enthaltend dihydroxyterminierte Polydialkylsiloxane und Alkoxysilanhärter beschrieben.

In der EP 2 774 672 A1 wird ein Katalysator für die Vernetzung von Siliconkautschukmassen mit einem Vernetzer auf Basis einer Silanverbindung mit Lactatgruppen beschrieben, wobei der Katalysator mindestens zwei voneinander verschiedene Verbindungen umfasst, die unabhängig voneinander aus Metallsalzen von Carbonsäuren ausgewählt werden.

In der EP 2 030 976 A1 wird ein Härter für Siliconkautschukmassen beschrieben, umfassend mindestens eine Verbindung mit der allgemeinen Formel Si(R¹)₃R² (I),
wobei die Reste R¹ 2-Hydroxypropionsäurealkylester-Reste mit der allgemeinen Formel -OCH(CH₃)COOR sind, wobei der Rest R ein optional substituierter, geradkettiger oder verzweigter Alkylrest mit 1 bis 4 Kohlenstoffatomen ist und
wobei der Rest R² ausgewählt wird auf der Gruppe, bestehend auf einem optional substituierten, geradkettigen oder verzweigten Alkenylrest mit mindestens zwei Kohlenstoffatomen.

Die DE 24 54 408 A1 beschreibt härtbare Zusammensetzungen, umfassend ein Silanolendgruppen aufweisendes Polydiorganosiloxan, ein vernetzendes Silan und ein Silanol, das insbesondere Tris(trimethoxysilylpropyl)isocyanurat sein kann.

In der WO 2012/064611 A1 wird eine einteilige, bei Raumtemperatur vulkanisierende (RTV) silikonbasierte luft- und wasserresistente Zusammensetzung beschrieben, umfassend Silanol-terminierte Diorganopolysiloxanpolymere, pyrogene Kieselsäure, mit Stearinsäure behandelte gemahlener Calciumcarbonat-Füllstoff, Polyalkoxy-Vernetzungsmittel, Metallchelat-Kondensationskatalysator und einen Haftvermittler.

Die WO 2008/118459 A2 beschreibt architektonische Elemente, die mindestens zwei Komponenten aufweisen, die miteinander verbunden sind, wobei eine Silikonkautschukzusammensetzung verwendet wird, die eine schnelle Festigkeitsentwicklung und Tiefenhärtung aufweist, die für die Anwendung als Bettungsdichtstoff bei der Herstellung von architektonischen Elementen wie Fensterbaugruppen, Türbaugruppen, Strukturverglasungen, Vorhangfassadenanwendungen und dergleichen nützlich ist.

In der DE 101 03 421 A1 wird eine Polyorganosiloxan-Zusammensetzung beschrieben, umfassend neben dem Polyorganosiloxan mindestens ein Alkoxysilan-/siloxanvernetzer, ein Phosphorsäureester und/oder ein Salz davon, einen zinnhaltigen oder mindestens einen titanchelathaltigen Katalysator, ein Aminoalkylsiloxan und ein Isocyanurat.

In der WO 2015/082408 A2 wird ein Verfahren zum Beschichten einer gealterten Beschichtungsschicht auf einem Substrat beschrieben, umfassend das
a) Bereitstellen einer Beschichtungszusammensetzung, die härtbares oder vernetzbares Organosiloxanpolymer, eine Organobismutverbindung und ein Silankupplungsmittel umfasst,
b) Aufbringen einer Schicht der Beschichtungszusammensetzung auf eine gealterte Beschichtungsschicht auf einem Substrat und
c) Aushärten und/oder Vernetzen der Beschichtungszusammensetzung unter Bildung einer gehärteten und/oder vernetzten Beschichtungsschicht, worin die gealterte Beschichtungsschicht eine mehr als sechs Monate zuvor aufgebrachte Beschichtungsschicht ist.

Im Zuge der Entwicklung der vorliegenden Erfindung wurde herausgefunden, dass sich Haftvermittler mit reaktiven funktionellen Gruppen, insbesondere mit reaktiven Amingruppen, nachteilig auf viele Silikonkautschukmassen auswirken können. Insbesondere wurde herausgefunden, dass Haftvermittler mit reaktiven funktionellen Gruppen, insbesondere mit reaktiven Amingruppen, die Lagerstabilität von Silikonkautschukmassen herabsetzen können.

Aufgabe der Erfindung ist es somit, Silikonkautschukmassen mit verbesserter Lagerstabilität bereitzustellen.

Eine weitere Aufgabe der Erfindung ist es, Zusammensetzungen für Silikonkautschukmassen enthaltend bestimmte Kombinationen von Bestandteilen bereitzustellen, die eine verbesserte Lagerstabilität, insbesondere der Silikonkautschukmassen, ermöglichen.

Aufgabe der Erfindung war es ferner, Silikonkautschukmassen bereitzustellen, die nach Aushärtung gute mechanische Eigenschaften aufweisen.

Aufgabe der Erfindung war es weiterhin, dass das Polymerisationsprodukt nach abgeschlossener Härtung der Silikonkautschukmasse transparent bzw. klar ist.

Aufgabe der Erfindung ist es ferner, Silikonkautschukmassen bereitzustellen, die toxikologisch unbedenklich sind und/oder wenig aggressiv gegenüber Untergründen wie Metallen, Marmor oder Mörtel sind.

Alle oder einige dieser Aufgaben werden durch die in Anspruch 1, 2 und 21 angegebenen Zusammensetzungen, das in Anspruch 24 angegebene Dichtungsmittel, Klebstoff oder Beschichtungsmittel, die in Anspruch 25 und 26 angegebenen Verwendungen sowie die in Anspruch 28 angegebene Verbindung gelöst.

Vorteilhafte Ausgestaltungen der Erfindung sind in den abhängigen Ansprüchen angegeben und werden nachfolgend im Einzelnen erläutert.

Die erfindungsgemäße Zusammensetzung enthält
a. einen Härter für Silikonkautschukmassen enthaltend eine Verbindung mit der allgemeinen Strukturformel R¹ₘSi(R)₄₋ₘ,
   wobei
   jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylguppe bedeutet,
   m eine ganze Zahl von 0 bis 2 ist,
   jeder R unabhängig voneinander ausgewählt ist aus der Gruppe bestehend aus
      - einem Hydroxycarbonsäureesterrest mit der allgemeinen Strukturformel (I): 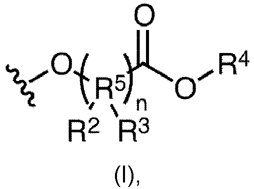 wobei
         jeder R² unabhängig voneinander H oder eine optional substituierte, geradkettige oder verzweigte C1- bis C16-Alkylgruppe oder eine C4- bis C14-Arylgruppe bedeutet,
         jeder R³ unabhängig voneinander H oder eine optional substituierte, geradkettige oder verzweigte C1- bis C16-Alkylgruppe oder eine C4- bis C14-Arylgruppe bedeutet,
         R⁴ eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
         R⁵ C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen bedeutet, und
         n eine ganze Zahl von 1 bis 10 ist,
      - -O-C(O)-R⁶, wobei R⁶ H, eine C1- bis C16-Alkylgruppe, eine C4- bis C14-Cycloalkylgruppe oder eine C4- bis C14-Arylgruppe bedeutet und
      - -O-N=CR⁷R⁸, wobei R⁷und R⁸ unabhängig voneinander H, eine C1- bis C16-Alkylgruppe, eine C4- bis C14-Cycloalkylgruppe oder eine C4- bis C14-Arylgruppe bedeuten,
         und
b. einen Haftvermittler, der die allgemeine Strukturformel (II) oder (III) 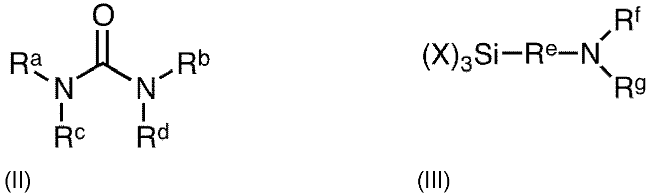 aufweist,
   wobei
   R^{a} eine optional substituierte geradkettige oder verzweigte C1- bis C16-Alkylgruppe oder -(CH₂)ₗ-Si(X)₃ bedeutet, wobei I eine ganze Zahl von 1 bis 10 ist,
   R^{b} -(CH₂)ₒ-Si(X)₃ oder R^{k}-N(C(O)-NH-(CH₂)ₚ-Si(X)₃)-R^{k}-NH-C(O)-NH-(CH₂)_{q}-Si(X)₃ bedeutet, wobei jeder R^{k} unabhängig voneinander -(CH₂)ᵣ- bedeutet, o eine ganze Zahl von 1 bis 10 ist, r eine ganze Zahl von 1 bis 8, insbesondere 2, ist und p und q unabhängig voneinander eine ganze Zahl von 1 bis 10 sind,
   R^{c} und R^{d} unabhängig voneinander H, eine optional substituierte geradkettige oder verzweigte C1- bis C16-Alkylgruppe oder Rⁱ bedeuten oder R^{c} und R^{d} zusammen mit den Atomen, an die sie gebunden sind, und der zwischen diesen Atomen eingeschlossenen Carbonylgruppe einen 5- bis 8-gliedrigen Ring mit 1 bis 4 Heteroatomen, ausgewählt aus der Gruppe bestehend aus N, O und S, und 1 bis 4 Carbonylgruppen bilden, wobei der Ring optional mit einem weiteren R^{a} substituiert ist,
   jedes X unabhängig voneinander ausgewählt ist aus der Gruppe bestehend aus -OMe, -OEt, -OⁱPr, -OⁿPr, -OⁿBu, -O^{sec}Bu, -O^{iso}Bu, -O^{t}Bu, -OPh und R, wobei R wie gemäß unter a. definiert ist,
   R^{e} -(CH₂)ₛ- bedeutet, wobei s eine ganze Zahl von 1 bis 10 ist,
   R^{f} H, eine optional substituierte C1- bis C16-Alkylgruppe oder Rⁱ bedeutet,
   R^{g} eine optional substituierte C2- bis C16-Alkylgruppe, Rⁱ oder -C(O)-R^{h} bedeutet,
   wobei R^{f} nur dann H bedeutet, wenn R^{g} -C(O)-R^{h} bedeutet, und
   wobei R^{h} eine optional substituierte, geradkettige oder verzweigte C1- bis C16-Alkoxygruppe, -O-Rⁱ, eine optional substituierte, geradkettige oder verzweigte C1- bis C16-Alkylgruppe, Rⁱ oder -CHMe-O-C(O)-Me bedeutet,
   oder wobei R^{f} und R^{g} zusammen mit dem Atom, an das sie gebunden sind, ein optional substituiertes, heterocyclisches Ringsystem mit 3 bis 14 C-Atomen und 1 bis 5 Heteroatomen, ausgewählt aus der Gruppe bestehend aus N und O bilden, und
   jeder Rⁱ unabhängig voneinander ein optional substituiertes cyclisches Ringsystem mit 4 bis 14 C-Atomen oder eine optional substituierte aromatische Gruppe mit 4 bis 14 C-Atomen bedeutet,
   oder Oligomere oder Polymere der Strukturformeln (II) und (III).

Überraschend hat sich gezeigt, dass Silikonkautschukmassen, insbesondere Dichtstoffformulierungen, enthaltend die erfindungsgemäße Zusammensetzung eine oder mehrere der folgenden Eigenschaften aufweisen: insbesondere eine erhöhte Lagerstabilität gute mechanische Eigenschaften, insbesondere eine gute Reißfestigkeit, einen angenehmen Geruch, Farblosigkeit und Transparenz. Ohne an eine wissenschaftliche Theorie gebunden sein zu wollen, scheint der Effekt der erfindungsgemäßen Zusammensetzung dadurch zustande zu kommen, dass die erfindungsgemäß kombinierten Härter und Haftvermittler eine hohe Kompatibilität zueinander aufweisen. Dadurch wird insbesondere die erhöhte Stabilität der erfindungsgemäßen Zusammensetzung begründet.

"Dichtungsmittel" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Die Bezeichnung "Klebstoff" bezieht sich auf Stoffe, die Flügelteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Unter "Härter" werden insbesondere vernetzungsfähige Silanverbindungen, verstanden, die mindestens zwei durch Hydrolyse abspaltbare Gruppen aufweisen. Beispiele für derartige vernetzungsfähige Silanverbindungen sind Si(OCH₃)₄, Si(CH₃)(OCH₃)₃ und Si(CH₃)(C₂H₅)(OCH₃)₂. Härter können auch als Vernetzer bezeichnet werden. "Härter" umfasst insbesondere auch "Härtersysteme", die insbesondere mehr als eine vernetzungsfähige Silanverbindung enthalten können.

In der allgemeinen Strukturformel (I) ist der Hydroxycarbonsäureesterrest über das Sauerstoffatom der Hydroxygruppe an das Siliciumatom gebunden. Beispielsweise kann eine im Härter enthaltene Verbindung mit der allgemeinen Strukturformel R¹ₘSi(R)₄₋ₘ, in der m 1 ist, die allgemeine Strukturformel (la) aufweisen:

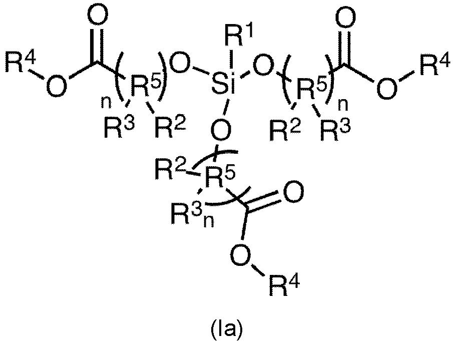

Ferner kann jeder Rest R¹ verschieden sein, wenn mehrere Reste R¹ an das Siliciumatom gebunden sind. Oligomere und Polymere der Verbindungen mit den allgemeinen Strukturformeln (II) und (III) sind insbesondere mindestens zwei Monomere Verbindungen mit den allgemeinen Strukturformeln (II) und (III), in denen mindestens zwei Siliciumatome der verschiedenen Monomere über Siloxansauerstoffe miteinander verbunden sind. Ferner können die Reste R⁴, R⁶, R⁷ und R⁸ des Härters der erfindungsgemäßen Zusammensetzung optional substituiert sein. Weiterhin können die Reste R^{a}, R^{b}, R^{e} und R^{k} des Haftvermittlers der erfindungsgemäßen Zusammensetzung optional substituiert sein.

Mit der Bezeichnung "Alkylgruppe" ist eine gesättigte Kohlenwasserstoffkette gemeint. Alkylgruppen weisen insbesondere die allgemeine Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, Propyl-, Butyl-, Isopropyl-, iso-Butyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel -CₙH₂ₙ₋₁ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Arylgruppen" bezeichnen monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn das nicht speziell angegeben ist.

Eine "aromatische Gruppe" bezeichnet cyclische, planare Kohlenwasserstoffe mit aromatischem System. Eine aromatische Gruppe mit 4 bis 14 C-Atomen bezeichnet insbesondere eine aromatische Gruppe, die 4 bis 14 Kohlenstoffatome enthält. Die aromatische Gruppe kann insbesondere monocyclisch, bicyclisch oder tricyclisch sein. Eine aromatische Gruppe kann ferner auch 1 bis 5 Heteroatome ausgewählt aus der Gruppe bestehend aus N, O, und S enthalten. Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispiele jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* eine aromatische Gruppe mit 6 Kohlenstoffatomen, insbesondere Benzol, ist, zwei Wasserstoffatome von der aromatische Gruppe, insbesondere von Benzol, entfernt sein, um eine Eingliederung in die Strukturformel zu erlauben.

Eine "Cycloalkylgruppe" bezeichnet einen Kohlenwasserstoffring, der nicht aromatisch ist. Insbesondere bezeichnet eine Cycloalkylgruppe mit 4 bis 14 C-Atomen einen nichtaromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn das nicht speziell angegeben ist.

Eine "Aralkylgruppe" bezeichnet eine durch eine Arylgruppe substituierte Alkylgruppe. Eine "C5- bis C15-Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele für Aralkylgruppen sind Benzyl- und Phenylethyl-. Eine Aralkylgruppe kann insbesondere auch substituiert sein, auch wenn das nicht speziell angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nichtaromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, O, und S enthalten.

"Gesättigte cyclische Ringsysteme" sind nicht aromatisch und weisen auch keine Doppel-oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Ein "teilweise ungesättigtes cyclisches Ringsystem" weist im Gegensatz zu einem gesättigten cyclischen Ringsystem mindestens eine Doppel- oder Dreifachbindung auf, wobei das cyclische Ringsystem jedoch nicht aromatisch ist. Beispiele für ungesättigte cyclische Ringsysteme sind Cyclopenten, Cyclohexen, Norbornen und 2H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* ein cyclisches Ringsystem mit 6 Kohlenstoffatomen, insbesondere Cyclohexen, ist, zwei Wasserstoffatome von dem cyclischen Ringsystem, insbesondere von Cyclohexen, entfernt sein, um eine Eingliederung in die Strukturformel zu erlauben.

Ein "heterocyclisches Ringsystem" bezeichnet ein cyclisches Ringsystem, das 1 bis 5 Heteroatome, bevorzugt ausgewählt aus der Gruppe bestehend aus N, O, und S enthält.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist.

"Optional substituiert" bedeutet, dass in der entsprechenden Gruppe oder in dem entsprechenden Rest Wasserstoffatome durch Substituenten ersetzt sein können. Substituenten können insbesondere ausgewählt sein aus der Gruppe bestehend aus C1-bis C4-, Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette bzw. dem Hauptgerüst der Verbindung verbunden ist.

In den vorgenannten Definitionen ergibt sich die notwendige Valenz des entsprechenden Bestandteils zur Eingliederung in eine Strukturformel, soweit nicht angegeben, für den Fachmann von selbst.

Gemäß einer Ausführungsform der Erfindung enthält die erfindungsgemäße Zusammensetzung Oligomere oder Polymere des Härters oder der Härter besteht daraus. Oligomere und Polymere des Härters können insbesondere mindestens zwei Verbindungen mit der allgemeinen Strukturformel R¹ₘSi(R)₄₋ₘ sein, in denen mindestens zwei Siliciumatome der verschiedenen Monomere über Siloxansauerstoffe miteinander verbunden sind. Entsprechend der Anzahl an verbindenden Siloxansauerstoffen am Siliciumatom ist der Anzahl der Reste R reduziert.

Gegenstand der gegenwärtigen Erfindung ist ebenfalls eine Zusammensetzung mindestens enthaltend eine Mischung erhältlich durch Vermischen mindestens eines Härters gemäß Anspruch 1 a. mit mindestens einem Haftvermittler gemäß Anspruch 1 b. Beispielsweise kann es in erfindungsgemäßen Zusammensetzungen zu Austauschreaktionen zwischen den Gruppen R des Härters und den Gruppen X des Haftvermittlers kommen. Diese Austauschreaktionen können insbesondere bis zu einem Gleichgewichtszustand ablaufen. Dieser Prozess kann auch als Equilibrierung bezeichnet werden.

Zum Beispiel kann es in einer Zusammensetzung enthaltend Tris(2-ethylhexylsalicylato)propylsilan und N-Methyl(3-(trimethoxysilyl)-propyl)-carbamat zu einem Austausch der 2-Ethylhexylsalicylat- und der Methoxygruppen kommen. Dabei können insbesondere Zusammensetzungen entstehen, die Tris(2-ethylhexylsalicylato)propylsilan, Bis(2-ethylhexylsalicylato)(methoxy)propylsilan, (2-Ethylhexylsalicylato)(dimethoxy)propylsilan, Trimethoxypropylsilan, N-Methyl(3-(trimethoxysilyl)-propyl)-carbamat, N-Methyl(3-(dimethoxysilyl)(2-ethylhexylsalicylato)-propyl)-carbamat, N-Methyl(3-bis(2-ethylhexylsalicylato)(methoxysilyl)-propyl)-carbamat und/oder N-Methyl(3-tris(2-ethylhexylsalicylato)-propyl)-carbamat enthalten.

Die voranstehend beschriebenen Austauschreaktionen, speziell die Equilibrierung, können insbesondere auch mit geeigneten Gruppen R^{Au} anderer in der erfindungsgemäßen Zusammensetzung enthaltener Silane stattfinden. Für Austauschreaktionen geeignete Gruppen R^{Au} sind beispielsweise Alkoxy-, Carboxylat- und Oximgruppen, um einige zu nennen. Dementsprechend können insbesondere die Gruppen R^{Au} von Silanen vom Typ (R^{In})_{z}Si(R^{Au})_{4-z} mit den Gruppen R des Härters und den Gruppen X des Haftvermittlers Austauschreaktionen eingehen, wobei die Gruppen R^{In} keine Austauschreaktionen eingehen und z eine ganze Zahl von 0 bis 3 ist. Dementsprechend können durch die Austauschreaktionen die verschiedenen geeigneten Gruppen X, R und R^{Au}, sofern sie vorhanden sind, auf die in einer erfindungsgemäßen Zusammensetzung enthaltenen, insbesondere in einer Silikonkautschukzusammensetzung enthaltenen, entsprechenden Silanverbindungen verteilt werden, wobei sich insbesondere ein Gleichgewichtszustand einstellen kann.

Gemäß einer weiteren Ausführungsform der Erfindung bedeuten im Haftvermittler R^{c} und R^{d} unabhängig voneinander H oder eine geradkettige oder verzweigte C1- bis C8-Alkylgruppe oder R^{c} und R^{d} bilden zusammen mit den Atomen, an die sie gebunden sind, und der zwischen diesen Atomen eingeschlossenen Carbonylgruppe einen 6-gliedrigen Ring mit 1 bis 4, insbesondere 3, Heteroatomen, ausgewählt aus der Gruppe bestehend aus N, O und S, insbesondere N, und 1 bis 4, insbesondere 3, Carbonylgruppen, wobei der Ring insbesondere mit einem weiteren R^{a} substituiert ist. Insbesondere können R^{c} und R^{d} mit den Atomen, an die sie gebunden sind, und der zwischen diesen Atomen eingeschlossenen Carbonylgruppe einen Isocyanursäurering bilden, der insbesondere am dritten Stickstoffatom des Rings mit einem weiteren R^{a} substituiert ist. R^{a} ist dabei jeweils wie hierin beschrieben definiert.

Gemäß einer weiteren Ausführungsform der Erfindung bedeutet im Haftvermittler R^{a} - (CH₂)ₗ-Si(X)₃, wobei I und X wie hierin beschrieben definiert sind, und/oder R^{f} bedeutet H oder eine optional substituierte geradkettige oder verzweigte C1- bis C16-Alkylgruppe und/oder R^{g} bedeutet eine optional substituierte geradkettige oder verzweigte C2- bis C16-Alkylgruppe oder -C(O)-R^{h}, insbesondere -C(O)-R^{h}, und/oder R^{h} bedeutet eine optional substituierte geradkettige oder verzweigte C1- bis C16-Alkoxygruppe, eine optional substituierte geradkettige oder verzweigte C1- bis C16-Alkylgruppe oder -CHMe-O-C(O)-Me, wobei R^{f} nur dann H bedeutet, wenn R^{g} -C(O)-R^{h} bedeutet. Bevorzugt bedeutet I in R^{a} 2 oder 3. X bedeutet in R^{a}, R^{b} oder in dem Haftvermittler mit der allgemeinen Strukturformel (III) jeweils bevorzugt-OMe oder -OEt. R^{f} kann in der allgemeinen Strukturformel (III) H bedeuten, jedoch nur, wenn R^{g} -C(O)-R^{h} bedeutet, wenn also eine Carbonylgruppe vicinal zum Stickstoffatom vorhanden ist.

Es hat sich gezeigt, dass Zusammensetzungen enthaltend die vorausgehend beschriebenen Haftvermittler gute Eigenschaften, insbesondere eine erhöhte Stabilität, aufweisen. Ferner weisen Dichtstoffformulierungen mit Zusammensetzungen enthaltend derartige Haftvermittler gute mechanische Eigenschaften auf.

Gemäß einer weiteren Ausführungsform der Erfindung enthält die Zusammensetzung weniger als 5 Gew.-%, insbesondere weniger als 4 Gew.-%, bevorzugt weniger als 3 Gew.-%, weiter bevorzugt weniger als 2 Gew.-%, noch weiter bevorzugt weniger als 1 Gew.-%, am meisten bevorzugt weniger als 0,5 Gew.-%, jeweils bezogen auf das Gesamtgewicht der Zusammensetzung, an Verbindungen mit -NHR^{x}-Gruppen, wobei R^{x} H oder eine C1- bis C10- Alkylgruppe, insbesondere eine geradkettige C1- bis C4-Alkylgruppe, oder eine C4- bis C10-Cycloalkylgruppe oder eine C4- bis C12-Arylgruppe bedeutet. Unter derartige Verbindungen fallen insbesondere primäre und sekundäre Amine. Es hat sich in praktischen Versuchen gezeigt, dass Zusammensetzungen, die die oben angeführten Gehalte an Verbindungen mit -NHR^{x}-Gruppen enthalten, insbesondere eine erhöhte Stabilität aufweisen. Insbesondere werden der erfindungsgemäßen Zusammensetzung keine primären und/oder sekundären Amine als Haftvermittler zu gesetzt. Es ist jedoch grundsätzlich möglich, primäre und/oder sekundäre Amine in anderer Funktion, zum Beispiel als Thixotropiermittel einzusetzen.

Gemäß einer weiteren Ausführungsform der Erfindung ist der Haftvermittler ausgewählt aus der Gruppe bestehend aus N-Methyl(3-(trimethoxysilyl)-propyl)-carbamat, N-Ethyl(3-(triethoxysilyl)-propyl)-carbamat, Trimethoxypropylsilylacetoxypropionsäureamid, N, N'-Bis(trimethoxysilylpropyl)harnstoff, Tris(triethoxysilylpropyl)diethylentriharnstoff, 1,3,5-Tris(trimethoxysilylpropyl)-isocyanurat, Diethylaminopropyltrimethoxysilan, Dipropylaminopropyltrimethoxysilan und Dibutylaminotrimethoxysilan. Zusammensetzungen enthaltend die vorstehenden Haftvermittler weisen gute Eigenschaften, insbesondere eine erhöhte Stabilität, auf.

Gemäß einer weiteren Ausführungsform der Erfindung enthält die Zusammensetzung einen weiteren Haftvermittler wie voranstehend beschrieben oder mit der allgemeinen Strukturformel (R^{#}O)₃Si(CH₂)ₜNR^{y}R^{z}, wobei R^{#}, R^{y} und R^{z} unabhängig voneinander eine optional substituierte, geradkettige oder verzweigte C1- bis C16-Alkylgruppe, ein optional substituiertes cyclisches Ringsystem mit 4 bis 14 C-Atomen oder eine optional substituierte aromatische Gruppe mit 4 bis 14 C-Atomen bedeuten und t eine ganze Zahl von 1 bis 10 ist. Insbesondere kann der weitere Haftvermittler ausgewählt sein aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropoxysilan.

Zusammensetzungen enthaltend einen weiteren Haftvermittler wie vorstehend beschrieben zeichnen sich insbesondere durch eine höhere Stabilität, insbesondere bei Lagerung bei höheren Temperaturen, aus.

Erfindungsgemäß enthält die Zusammensetzung einen Härter für Silikonkautschukmassen enthaltend eine Verbindung mit der allgemeinen Strukturformel R¹ₘSi(R)₄₋ₘ. Insbesondere ist in der allgemeinen Strukturformel R¹ₘSi(R)₄₋ₘ R ein Hydroxycarbonsäureesterrest mit der allgemeinen Strukturformel (I), 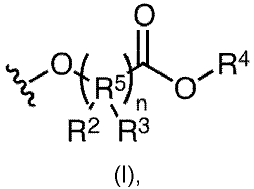 wobei R², R³, R⁴, R⁵ und n wie hierin beschrieben definiert sind. In der allgemeinen Strukturformel (I) ist der Hydroxycarbonsäureesterrest über das Sauerstoffatom der Hydroxygruppe an das Siliciumatom gebunden. Beispielsweise kann eine im Härter enthaltene Verbindung mit der allgemeinen Strukturformel R¹ₘSi(R)₄₋ₘ, in der m 1 ist, die allgemeine Strukturformel (la) aufweisen:

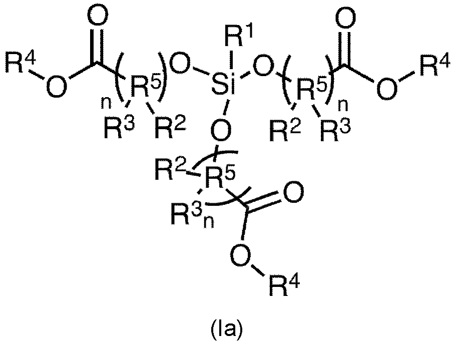

Zusammensetzungen enthaltend Härter mit derartigen Verbindungen haben den Vorteil, dass sie insbesondere toxikologisch unbedenklich sind und neutralvernetzend sind. Somit können sie auf einer Vielzahl von Untergründen eingesetzt werde.

Gemäß einer Ausführungsform der Erfindung bedeutet in der allgemeinen Strukturformel R¹ₘSi(R)₄₋ₘ jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe oder eine optional substituierte C4- bis C10-Arylgruppe. Bevorzugt bedeutet in der allgemeinen Strukturformel R¹ₘSi(R)₄₋ₘ jeder R¹ unabhängig voneinander ein Methyl-, Ethyl-, Propyl-, Vinyl-, Phenyl- oder ein Allylrest. Praktische Versuche haben gezeigt, dass Härter mit derartigen Resten Dichtstoffe mit guten mechanischen Eigenschaften ergeben. Ferner können Dichtstoffe mit Härtern mit derartigen Resten farblos und transparent sein.

Die erfindungsgemäße Zusammensetzung enthält einen Härter enthaltend eine Verbindung mit der allgemeinen Strukturformel R¹ₘSi(R)₄₋ₘ, wobei m eine ganze Zahl von 0 bis 2 sein kann. Die Verbindung mit der allgemeinen Strukturformel R¹ₘSi(R)₄₋ₘ wird insbesondere auch als Silan bezeichnet. Somit kann der Härter also ein Silan enthalten, das über zwei, drei oder vier hydrolysierbare Gruppen verfügt. Bevorzugt ist m 0 oder 1, so dass der Härter ein Silan mit drei oder vier hydrolysierbaren Gruppen enthält. Auf diese Weise kann der Vernetzungsgrad des Härters gesteuert werden und die Lösemittelresistenz und/oder die mechanischen Eigenschaften von Silikonkautschukzusammensetzungen können eingestellt werden.

In der allgemeinen Strukturformel R¹ₘSi(R)₄₋ₘ kann m auch 2 sein. Dadurch weist die allgemeine Strukturformel zwei Reste R¹ auf. Die Reste R¹ können gleich oder verschieden voneinander sein. Durch die Wahl der Reste R¹ kann die Geschwindigkeit der Vernetzung gesteuert werden.

In der allgemeinen Strukturformel R¹ₘSi(R)₄₋ₘ kann R ein Milchsäureamidrest mit der allgemeinen Strukturformel (V): 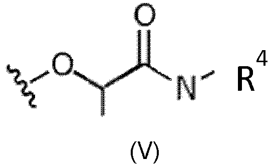 sein,
oder Oligomere oder Polymere des Härters,
wobei R⁴ wie hierin beschrieben definiert ist.

In der allgemeinen Strukturformel R¹ₘSi(R)₄₋ₘ kann R ein Hydroxycarbonsäureesterrest mit der hierin beschriebenen allgemeinen Strukturformel (I) sein. Gemäß einer Ausführungsform bedeutet in diesem Hydroxycarbonsäureesterrest jeder R² und R³ unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe. Insbesondere kann im Hydroxycarbonsäureesterrest jeder R² und R³ unabhängig voneinander ausgewählt sein aus der Gruppe bestehend aus H, Methyl-, Ethyl-, Propyl-, Isopropyl-, Butyl-, n-Butyl-, sec-Butyl-, iso-Butyl- und tert-Butyl-. Besonders bevorzugt ist im Hydroxycarbonsäureesterrest jeder R² und R³ ausgewählt aus der Gruppe bestehend aus H und Methyl. Dabei können für den Fall, dass n eine ganze Zahl größer als oder gleich 1 ist, R² und R³ für jedes Kohlenstoffatom der Kette unabhängig voneinander verschieden sein. Zusammensetzungen enthaltend einen Härter enthaltend derartige Verbindungen können insbesondere einen angenehmen Geruch zeigen und/oder sich gut compoundieren lassen.

Gemäß einer weiteren Ausführungsform bedeutet im Hydroxycarbonsäureesterrest R⁴ eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe, eine C5- bis C11-Aralkylgruppe oder eine C4- bis C10-Arylgruppe. Insbesondere kann im Hydroxycarbonsäureesterrest R⁴ ausgewählt sein aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-. Zusammensetzungen enthaltend einen Härter enthaltend derartige Verbindungen führen zu Dichtstoffen mit guten mechanischen Eigenschaften. Ferner lassen sie sich gut compoundieren. Die resultierenden Dichtstoffe können weiterhin transparent und farblos sein.

Gemäß einer weiteren Ausführungsform der Erfindung ist im Hydroxycarbonsäureesterrest R⁵ eine aromatische Gruppe mit 4 bis 14 C-Atomen, insbesondere mit 6 C-Atomen. In diesem Fall ist n bevorzugt 1. Um die Eingliederung der aromatischen Gruppe in die allgemeine Strukturformel (I) zu ermöglichen, werden insbesondere entsprechend zwei Wasserstoffatome entfernt, an deren Stelle die Estergruppe und die Alkoholgruppe gebunden sind.

Gemäß einer weiteren Ausführungsform der Erfindung ist im Hydroxycarbonsäureesterrest R⁵ eine optional substituierte aromatische Gruppe mit 4 bis 14 C-Atomen, wobei die aromatische Gruppe kein Benzolrest ist.

Gemäß einer bevorzugten Ausführungsform der Erfindung ist im Hydroxycarbonsäureesterrest R⁵ eine optional substituierte aromatische Gruppe mit 4 bis 14 C-Atomen, wobei wenn m = 2, m = 1 oder m = 0 ist, die C6-Arylgruppe nicht 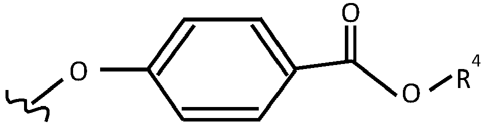 bedeutet
und wenn m = 2 oder m = 0 und die C6-Arylgruppe 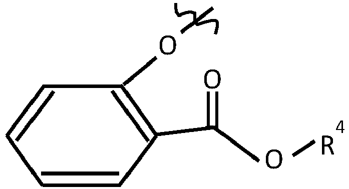 ist, R⁴ nicht Phenyl bedeutet;
und wenn die C6-Arylgruppe 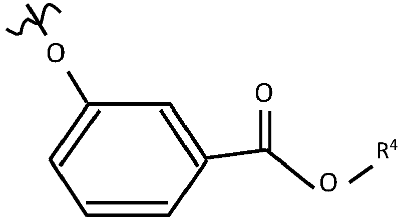 ist, R⁴ nicht Ethyl bedeutet.

Gemäß einer weiteren Ausführungsform der Erfindung ist im Hydroxycarbonsäureesterrest R⁵ ein divalenter Benzolrest. Ein divalenter Benzolrest bezeichnet dabei, wie hierin beschrieben, dass an einem Benzolring zwei Wasserstoffatome entfernt wurden, um eine Eingliederung in die allgemeine Strukturformel, insbesondere in die allgemeine Strukturformel (I), zu ermöglichen. Für den Fall, dass im Hydroxycarbonsäureesterrest R⁵ ein divalenter Benzolrest ist, ist n bevorzugt 1. Ferner können in diesem Fall R² und R³ unabhängig voneinander ausgewählt sein aus der Gruppe bestehend H, Methyl-, Ethyl-, und Propyl-. Besonders bevorzugt ist in diesem Fall n 1 und R² und R³ bedeuten H.

In einer besonders bevorzugten Ausführungsform der Erfindung kann R in der allgemeinen Strukturformel R¹ₘSi(R)₄₋ₘ ein Hydroxycarbonsäureesterrest mit der Strukturformel (VI): 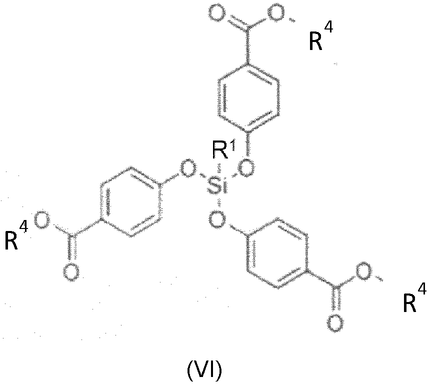 wobei R¹ Vinyl und R⁴ Ethylhexyl ist,
oder Oligomere oder Polymere des Härters.

In einer besonders bevorzugten Ausführungsform der Erfindung kann R in der allgemeinen Strukturformel R¹ₘSi(R)₄₋ₘ ein Hydroxycarbonsäureesterrest mit der Strukturformel (VII): 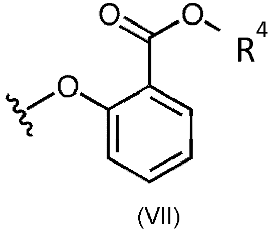 sein
wobei jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
R⁴ eine optional substituierte, geradkettige oder verzweigte C1- bis C16-Alkylgruppe, eine C4- bis C14-Cycloalkylgruppe oder eine C5- bis C15-Aralkylgruppe bedeutet
   oder Oligomere oder Polymere des Härters.

In der allgemeinen Strukturformel (VII) ist der Hydroxycarbonsäureesterrest über das Sauerstoffatom der Hydroxygruppe an das Siliciumatom gebunden.

Gemäß einer besonders bevorzugten Ausführungsform der Erfindung bedeutet R⁴ eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe oder eine C5- bis C11-Aralkylgruppe. Insbesondere ist R⁴ ausgewählt aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Naphthyl- und Cyclohexyl. Dabei ist R⁴ besonders bevorzugt ausgewählt aus der Gruppe bestehend aus Methyl-, Ethyl-, Isopropyl-, n-Butyl- und 2-Ethylhexyl-, insbesondere aus der Gruppe bestehend aus Ethyl- und 2-Ethylhexyl. Härter enthaltend derartige Verbindungen führen zu Dichtstoffen mit guten mechanischen Eigenschaften. Ferner lassen sie sich gut compoundieren. Die resultierenden Dichtstoffe sind weiterhin transparent und farblos.

Neben dem divalenten Benzolrest kann R⁵ auch andere aromatische Gruppen bedeuten. Beispielsweise kann R⁵ divalente, substituierte Benzolringe, wie Toluol, Xylol, Phenol, Anisol, oder Chlorbenzol bedeuten. Ferner kann R⁵ auch divalentes Naphthalin oder Anthracen bedeuten, die wiederum optional substituiert sein können. In diesem Fall ist n bevorzugt 1.

In einer bevorzugten Ausführungsform weisen die, im erfindungsgemäßen Härter enthaltenen Verbindungen der allgemeinen Formel R¹ₘSi(R)₄₋ₘ, die allgemeine Strukturformel (VIIa) auf:

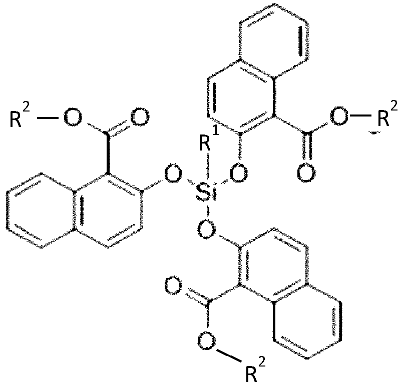

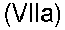

Gemäß dieser Ausführungsform ist in der allgemeinen Strukturformel (VIIa) R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet, und R² eine optional substituierte, geradkettige oder verzweigte C1- bis C16-Alkylgruppe, eine C4-bis C14-Cycloalkylgruppe, eine C5- bis C15-Aralkylgruppe oder eine C4- bis C14-Arylgruppe bedeutet, oder Oligomere oder Polymere des Härters. Insbesondere ist R² ausgewählt aus der Gruppe bestehend aus einer optional substituierten geradkettigen oder verzweigten C1- bis C12-Alkylgruppe, insbesondere einer optional substituierten, geradkettigen oder verzweigten C1- bis C8-Alkylgruppe, einer C4- bis C10-Cycloakylgruppe, einer C5- bis C10-Arylgruppe oder einer C5- bis C11-Aralkylgruppe. Besonders bevorzugt ist R² ausgewählt aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Phenyl-, Naphthyl- und Cyclohexyl.

In einer besonders bevorzugten Ausführungsform weisen die, im erfindungsgemäßen Härter enthaltenen Verbindungen der allgemeinen Formel R¹ₘSi(R)₄₋ₘ, Strukturformel (VIIb) auf:

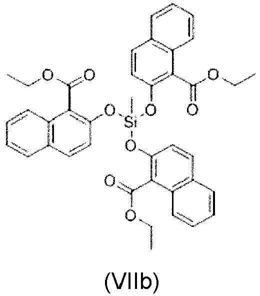

Demgemäß kann der Hydroxycarbonsäureesterrest R der Verbindung, die im erfindungsgemäßen Härter enthalten ist, auch von 2-Naphthalincarbonsäure-3-hydroxy-ethylester abstammen.

Ferner kann in dieser Ausführungsform die optional substituierte aromatische Gruppe auch 0 bis 5 Heteroatome, ausgewählt aus der Gruppe bestehend aus N, O und S, enthalten. Beispiele für solche aromatischen Gruppen sind Furan, Pyrrol und Chinolin, die wiederum optional substituiert sein können. In diesem Fall ist n bevorzugt 1.

Wie weiter oben beschrieben sind an der aromatischen Gruppe beispielsweise zwei Wasserstoffatome entfernt, an deren Stelle die Estergruppe und die Alkoholfunktion gebunden sind, um so eine Eingliederung in die allgemeine Strukturformel (I) zu ermöglichen.

R⁵ kann auch C und jeder R² und R³ H bedeuten. Ferner kann R⁵ auch C und R² H und R³ Methyl- bedeuten. Für den Fall, dass im Hydroxycarbonsäureesterrest R⁵ C bedeutet und n eine ganze Zahl größer als 1 ist, so können R² und R³ für jedes Kohlenstoffatom der Kette unabhängig voneinander verschieden sein.

Gemäß einer bevorzugten Ausführungsform der Erfindung ist im Hydroxycarbonsäureesterrest n eine ganze Zahl von 1 bis 5, bevorzugt von 1 bis 3, insbesondere 1.

Überraschend hat sich gezeigt, dass es mit der erfindungsgemäßen Zusammensetzung möglich ist, Silikonkautschukmassen bereitzustellen, für deren Aushärtung keine metallorganischen Katalysatoren, insbesondere keine Organozinnverbindungen, benötigt werden. Dies gilt insbesondere für erfindungsgemäße Zusammensetzungen, die eine Verbindung mit der allgemeinen Strukturformel R¹ₘSi(R)₄₋ₘ als Härter enthalten, wobei R die allgemeine Strukturformel (I) wie oben definiert aufweist, n 1 ist und R⁵ eine optional substituierte aromatische Gruppe mit 4 bis 14 C-Atomen, insbesondere ein divalenter Benzolrest, bedeutet.

Gemäß einer weiteren Ausführungsform der Erfindung ist in der allgemeinen Strukturformel R¹ₘSi(R)₄₋ₘ R ausgewählt aus der Gruppe bestehend aus einem Glykolsäureesterrest, einem Milchsäureesterrest und einem Salicylsäureesterrest, wobei R⁴ jeweils eine optional substituierte, geradkettige oder verzweigte C1- bis C16-Alkylgruppe, insbesondere eine optional substituierte, geradkettige oder verzweigte C1-bis C12- oder C1- bis C8-Alkylgruppe, eine C4- bis C14-Cycloalkylgruppe, insbesondere eine C4- bis C10-Cycloalkylgruppe, eine C5- bis C15-Aralkylgruppe, insbesondere eine C5- bis C11-Aralkylgruppe, oder eine C4- bis C14-Arylgruppe, insbesondere eine C4- bis C10-Arylgruppe bedeutet. Dabei ist R⁴ insbesondere ausgewählt aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

Praktische Versuche haben ergeben, dass Zusammensetzungen enthaltend derartige Verbindungen Dichtstoffe mit guten mechanischen Eigenschaften ergeben. Ferner weisen Zusammensetzungen enthaltend derartige Verbindungen einen angenehmen Geruch auf, da sie bei der Hydrolyse Substanzen freisetzen, die einen angenehmen Geruch aufweisen. Außerdem können Dichtstoffe mit derartigen Härtern transparent und farblos sein.

Gemäß einer besonders bevorzugten Ausführungsform der Erfindung ist der Härter in der Zusammensetzung ausgewählt aus der Gruppe bestehend aus Tris(methylsalicylato)vinylsilan, Tris(ethylsalicylato)vinylsilan, Tris(ethylhexylsalicylato)vinylsilan, Tris(2-ethylhexylsalicylato)vinylsilan, Tris(isopropylsalicylato)vinylsilan, Tris(methylsalicylato)methylsilan, Tris(ethylsalicylato)methylsilan, Tris(ethylhexylsalicylato)methylsilan, Tris(2-ethylhexylsalicylato)methylsilan, Tris(ethylsalicylato)propylsilan, Tris(ethylhexylsalicylato)propylsilan, Tris(2-ethylhexylsalicylato)propylsilan, Tris(isopropylsalicylato)propylsilan, Tris(methylsalicylato)ethylsilan, Tris(ethylsalicylato)ethylsilan, Tris(ethylhexylsalicylato)ethylsilan, Tris(2-ethylhexylsalicylato)ethylsilan, Tris(isopropylsalicylato)ethylsilan, Tris(methylsalicylato)phenylsilan, Tris(ethylsalicylato)phenylsilan, Tris(ethylhexylsalicylato)phenylsilan, Tris(2-ethylhexylsalicylato)phenylsilan, Tris(isopropylsalicylato)phenylsilan, Tetra(ethylhexylsalicylato)silan, Tetra(2-ethylhexylsalicylato)silan, Tetra(methylsalicylato)silan, Tetra(isopropylsalicylato)silan, Tetra(ethylsalicylato)silan und Mischungen davon.

Es wurde gefunden, dass derartige Härter positive Eigenschaften für Dichtstoffformulierungen aufweisen. Zum einen setzen derartige Härter bei der Hydrolyse Salicylsäurederivate frei, die toxikologisch unbedenklich sind. Ferner weisen diese Salicylsäurederivate einen angenehmen Geruch auf. Außerdem wurde gefunden, dass solche Härter bei der Verwendung in Dichtstoffen zu guten mechanischen Eigenschaften der Dichtstoffe führen. Dichtstoffe mit diesen Härtern können ferner ein farbloses und transparentes Erscheinen aufweisen.

Neben der Verbindung mit der allgemeinen Strukturformel R¹ₘSi(R)₄₋ₘ kann der Härter zusätzlich eine Verbindung mit der allgemeinen Strukturformel R⁹ᵤSi(R)₄₋ᵤ enthalten, wobei jeder R⁹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituiert C4- bis C14-Arylgruppe, insbesondere eine Methylgruppe, bedeutet, R wie hierin beschrieben definiert ist und u eine ganze Zahl von 0 bis 2 ist.

Gegenstand der vorliegenden Erfindung ist ferner eine Zusammensetzung enthaltend
a. einen Härter für Silikonkautschukmassen enthaltend eine Verbindung mit der allgemeinen Strukturformel R¹ₘSi(R)₄₋ₘ, wobei m eine ganze Zahl von 0 bis 2 ist und jeder R¹ und R unabhängig voneinander wie hierin beschrieben definiert sind oder der Härter ein wie hierin beschriebener Härter ist,
b. einen ersten Haftvermittler, der die allgemeine Strukturformel (II) oder (III) 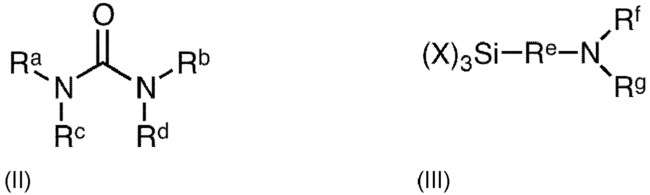 aufweist, wobei R^{a}, R^{b}, R^{c}, R^{d}, R^{e}, R^{f}, R^{g}, R^{h}, Rⁱ und R^{k} wie hierin beschrieben definiert sind oder der erste Haftvermittler ein hierin beschriebener Haftvermittler ist und
c. einen zweiten Haftvermittler mit der allgemeinen Strukturformel (R^{#}O)₃Si(CH₂)ₜNR^{y}R^{z}, wobei R^{#}, R^{y} und R^{z} unabhängig voneinander eine optional substituierte, geradkettige oder verzweigte C1- bis C16-Alkylgruppe, ein optional substituiertes cyclisches Ringsystem mit 4 bis 14 C-Atomen oder eine optional substituierte aromatische Gruppe mit 4 bis 14 C-Atomen bedeuten und t eine ganze Zahl von 1 bis 10 ist.

Insbesondere ist der zweite Haftvermittler ausgewählt aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropoxysilan.

Gemäß einer Ausführungsform der Erfindung enthält die erfindungsgemäße Zusammensetzung einen Härter enthaltend mindestens eine Verbindung mit der allgemeinen Strukturformel R¹ₘSi(R)₄₋ₘ, insbesondere mindestens jeweils eine Verbindung mit der Strukturformel R¹ₘSi(R)₄₋ₘ und R⁹ᵤSi(R)₄₋ᵤ, die, unabhängig voneinander ausgewählt ist, insbesondere sind, aus der Gruppe bestehend aus Tris(methylsalicylato)vinylsilan, Tris(ethylsalicylato)vinylsilan, Tris(ethylhexylsalicylato)vinylsilan, Tris(2-ethylhexylsalicylato)vinylsilan, Tris(isopropylsalicylato)vinylsilan, Tris(methylsalicylato)methylsilan, Tris(ethylsalicylato)methylsilan, Tris(ethylhexylsalicylato)methylsilan, Tris(2-ethylhexylsalicylato)methylsilan, Tris(ethylsalicylato)propylsilan, Tris(ethylhexylsalicylato)propylsilan, Tris(2-ethylhexylsalicylato)propylsilan, Tris(isopropylsalicylato)propylsilan, Tris(methylsalicylato)ethylsilan, Tris(ethylsalicylato)ethylsilan, Tris(ethylhexylsalicylato)ethylsilan, Tris(2-ethylhexylsalicylato)ethylsilan, Tris(isopropylsalicylato)ethylsilan, Tris(methylsalicylato)phenylsilan, Tris(ethylsalicylato)phenylsilan, Tris(ethylhexylsalicylato)phenylsilan, Tris(2-ethylhexylsalicylato)phenylsilan, Tris(isopropylsalicylato)phenylsilan, Tetra(ethylhexylsalicylato)silan, Tetra(2-ethylhexylsalicylato)silan, Tetra(methylsalicylato)silan, Tetra(isopropylsalicylato)silan, Tetra(ethylsalicylato)silan, Tris(ethyllactato)vinylsilan, Tris(2-ethylhexyllactato)vinylsilan, Tris(ethyllactato)methylsilan, Tris(2-ethylhexyllactato)methylsilan, Tris(butylglycolato)vinylsilan, und Tris(butylglycolato)methylsilan oder der Härter besteht daraus; einen Haftvermittler ausgewählt aus der Gruppe bestehend aus N-Methyl(3-(trimethoxysilyl)-propyl)-carbamat, N-Ethyl(3-(triethoxysilyl)-propyl)-carbamat, Trimethoxypropylsilylacetoxypropionsäureamid, N, N'-Bis(trimethoxysilylpropyl)harnstoff, Tris(triethoxysilylpropyl)diethylentriharnstoff, und 1,3,5-Tris(trimethoxysilylpropyl)-isocyanurat; und/oder einen weiteren oder zweiten Haftvermittler ausgewählt aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropxysilan.

Beispielsweise kann die erfindungsgemäße Zusammensetzung eine Kombination aus Tris(2-ethylhexylsalicylato)vinylsilan und/oder Tris(2-ethylhexylsalicylato)methylsilan als Härter und Dimethylaminopropyltrimethoxysilan und/oder N-Methyl(3-(trimethoxysilyl)-propyl)-carbamat als Haftvermittler enthalten.

Ferner kann die erfindungsgemäße Zusammensetzung eine Kombination aus Tris(2-ethylhexylsalicylato)vinylsilan und/oder Tris(2-ethylhexylsalicylato)methylsilan als Härter und Dimethylaminopropyltrimethoxysilan und/oder Tris(triethoxysilylpropyl)diethylentriharnstoff als Haftvermittler enthalten.

Außerdem kann die erfindungsgemäße Zusammensetzung eine Kombination aus Tris(2-ethylhexylsalicylato)vinylsilan und/oder Tris(2-ethylhexylsalicylato)methylsilan als Härter und Dimethylaminopropyltrimethoxysilan und/oder 1,3,5-Tris(trimethoxysilylpropyl)-isocyanurat als Haftvermittler enthalten.

Weiterhin kann die erfindungsgemäße Zusammensetzung eine Kombination aus Tris(ethylsalicylato)vinylsilan und/oder Tris(ethylsalicylato)propylsilan als Härter und Dimethylaminopropyltrimethoxysilan und/oder N-Methyl(3-(trimethoxysilyl)-propyl)-carbamat als Haftvermittler enthalten.

Die erfindungsgemäße Zusammensetzung kann auch eine Kombination aus Tris(ethylsalicylato)vinylsilan und/oder Tris(ethylsalicylato)propylsilan als Härter und Dimethylaminopropyltrimethoxysilan und/oder Tris(triethoxysilylpropyl)diethylentriharnstoff als Haftvermittler enthalten.

Ferner kann die erfindungsgemäße Zusammensetzung eine Kombination aus Tris(ethylsalicylato)vinylsilan und/oder Tris(ethylsalicylato)propylsilan als Härter und Dimethylaminopropyltrimethoxysilan und/oder 1,3,5-Tris(trimethoxysilylpropyl)-isocyanurat als Haftvermittler enthalten.

Außerdem kann die erfindungsgemäße Zusammensetzung eine Kombination aus Tris(2-ethylhexylsalicylato)methylsilan und/oder Tris(2-ethylhexylsalicylato)propylsilan als Härter und Dimethylaminopropyltrimethoxysilan und/oder N-Methyl(3-(trimethoxysilyl)-propyl)-carbamat als Haftvermittler enthalten.

Weiterhin kann die erfindungsgemäße Zusammensetzung eine Kombination aus Tris(2-ethylhexylsalicylato)methylsilan und/oder Tris(2-ethylhexylsalicylato)propylsilan als Härter und Dimethylaminopropyltrimethoxysilan und/oder Tris(triethoxysilylpropyl)diethylentriharnstoff als Haftvermittler enthalten.

Die erfindungsgemäße Zusammensetzung kann auch eine Kombination aus Tris(2-ethylhexylsalicylato)methylsilan und/oder Tris(2-ethylhexylsalicylato)propylsilan als Härter und Dimethylaminopropyltrimethoxysilan und/oder 1,3,5-Tris(trimethoxysilylpropyl)-isocyanurat als Haftvermittler enthalten.

Es hat sich gezeigt, dass derartige Kombinationen von Härtern und Haftvermittlern positive Eigenschaften für Dichtstoffformulierungen aufweisen. Zum einen setzen sie bei der Hydrolyse Salicylsäurederivate und Alkohole frei, die toxikologisch weitgehend unbedenklich sind. Die Salicylsäurederivate weisen zudem einen angenehmen Geruch auf. Außerdem wurde gefunden, dass solche Kombinationen in Dichtstoffen zu guten mechanischen Eigenschaften der Dichtstoffe führen. Dichtstoffe mit diesen Kombinationen weisen ferner ein farbloses und transparentes Erscheinen auf. Da bei der Hydrolyse neutral reagierende Verbindungen freigesetzt werden, eignen sich diese Kombinationen zudem für den Einsatz auf einer Vielzahl von Untergründen, zu denen auch angreifbare Untergründe wie Metalle, Marmor oder Mörtel zählen.

Gemäß einer weiteren Ausführungsform der Erfindung umfasst eine erfindungsgemäße Zusammensetzung neben den oben beschriebenen Bestandteilen Härter und Haftvermittler oder Härter, erster Haftvermittler und zweiter Haftvermittler zumindest eine Organosiliconverbindung, vorzugsweise zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein alpha,omega-dihydroxyl-terminiertes Polyorganosiloxan. Ganz besonders bevorzugt sind alpha,omega-dihydroxyl-terminierte Polydiorganosiloxane, insbesondere alpha,omega-dihydroxyl-terminierte Polydialkylsiloxane, alpha,omega-dihydroxyl-terminierte Polydialkenylsiloxane oder alpha,omega-dihydroxyl-terminierte Polydiarylsiloxane. Neben homopolymeren alpha,omega-dihydroxyl-terminierten Polydiorganosiloxanen können auch heteropolymere alpha,omega-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten.

Die bevorzugten organischen Substituenten umfassen geradkettige und verzweigte Alkylgruppen mit 1 bis 8 Kohlenstoffatomen, insbesondere Methyl-, Ethyl-, n- und isoPropyl-, und n-, sec- und tert-Butyl-, Vinyl- und Phenyl-. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl-und/oder Aminogruppen, substituiert sein. So können alpha,omega-dihydroxyl-terminierte Polydiorganosiloxane mit teilfluorierten oder perfluorierten organischen Substituenten verwendet werden oder alpha,omega-dihydroxyl-terminierte Polydiorganosiloxane mit durch Hydroxyl- und/oder Aminogruppensubstituierten organischen Substituenten an den Siliciumatomen.

Besonders bevorzugte Beispiele für eine Organosiliconverbindung sind alpha,omega-dihydroxyl-terminierte Polydialkylsiloxane, wie z.B. alpha,omega-dihydroxyl-terminierte Polydimethylsiloxane, alpha,omega-dihydroxyl-terminierte Polydiethylsiloxane oder alpha,omega-dihydroxyl-terminierte Polydivinylsiloxane, sowie alpha,omega-dihydroxyl-terminierte Polydiarylsiloxane, wie z.B. alpha,omega-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt. Es können auch Mischungen aus Polydiorganosiloxanen mit unterschiedlichen Viskositäten verwendet werden.

Falls gewünscht, kann die erfindungsgemäße Zusammensetzung weitere übliche Zusätze umfassen. Übliche Zusätze sind Füllstoffe, Farbmittel, Weichmacher, Thixotropiermittel, Benetzungsmittel, Katalysatoren und andere.

Als Füllstoffe können sowohl verstärkende als auch nichtverstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotropiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Überraschenderweise hat sich gezeigt, dass der Einsatz von Aminopropyltriethoxysilan (AMEO) als Thixotropiermittel zu besonders stabilen Dichtstoffen mit hervorragenden mechanischen Eigenschaften und ausgezeichneter Stabilität führt. Gegenstand der Erfindung ist daher auch die Verwendung von AMEO als Thixotropiermittel bei der Herstellung von Silikonkautschukmassen, insbesondere für die Bereitstellung von Dichtstoffformulierungen.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt., insbesondere von 100 cSt, Paraffinöle und polysubstituierte Alkylbenzole.

Ferner können metallorganische Katalysatoren verwendet werden, wie sie üblicherweise für kondensationsvernetzende Polysiloxane eingesetzt werden. Beispiele für Katalysatoren sind zinnorganische Verbindungen, wie beispielsweise Dibutylzinndilaurat, Dibutylzinndiacetat und Zinn(II)octoat. Als besonders geeignete Katalysatoren haben sich Alkyl-Zinn-Carboxylate, wie beispielsweise Dibutyl-Zinndilaurat, Dibutyl-Zinndivaleriat, Dibutyl-Zinndiacetat, Dibutyl-Zinndineodecanoat, Dibutyl-Zinndiacetylacetonat, Dioctyl-Zinn-bis(2-ethylhexanoat), Dibutyl-Zinndimaleat und Butylzinn-tris(2-ethylhexanoat) erwiesen. Titan-, Zirkonium- oder Aluminium-basierte Verbindungen können ebenfalls als Katalysatoren verwendet werden.

Es wurde gefunden, dass die Zusammensetzung unter Feuchtigkeitsausschluß über Zeitspannen von mehr als 9 Monaten und bis zu mehr als 12 Monaten aufbewahrt werden kann und unter dem Einfluß von Wasser oder Luftfeuchtigkeit bei Raumtemperatur vernetzt.

Weiterhin ist vorteilhaft, dass die erfindungsgemäße Zusammensetzung gemäß einer bevorzugten Ausführungsform beim Härten nur Hydroxycarbonsäureester, wie beispielsweise Ethylsalicylsäureester (Ethylsalicylat) und/oder Alkohole abgibt, welche im Gegensatz zu Oxim-Verbindungen, wie z.B. Butan-2-onoxim gesundheitlich wenig bedenklich sind, weder korrosiv noch aggressiv gegenüber Werkstoffen wie Metallen, Mörtel oder Stein (Marmor usw.) sind und einen angenehmen Geruch haben. Die ausgehärtete Zusammensetzung ist stippenfrei, transparent und klar.

Die erfindungsgemäße Zusammensetzung kann 30 bis 80 Gew.-%, bevorzugt 35 bis 70 Gew.-%, weiter bevorzugt 40 bis 60 Gew.%, der Organosiliconverbindung umfassen, jeweils bezogen auf das Gesamtgewicht der erfindungsgemäßen Zusammensetzung.

Die erfindungsgemäße Zusammensetzung kann ferner 10 bis 50 Gew.-%, bevorzugt 20 bis 40 Gew.-%, Weichmacher umfassen, jeweils bezogen auf das Gesamtgewicht der erfindungsgemäßen Zusammensetzung.

Weiterhin kann die erfindungsgemäße Zusammensetzung 1 bis 15 Gew.-%, bevorzugt 2 bis 14 Gew.-%, weiter bevorzugt 3 bis 13 Gew.-%, des Härters umfassen, jeweils bezogen auf das Gesamtgewicht der erfindungsgemäßen Zusammensetzung. Dabei kann der Härter insbesondere die beiden hierin beschriebenen Verbindungen R¹ₘSi(R)₄₋ₘ und R⁹ᵤSi(R)₄₋ᵤ enthalten oder daraus bestehen. Insbesondere kann im Härter in der erfindungsgemäßen Zusammensetzung die Verbindung R¹ₘSi(R)₄₋ₘ ausgewählt sein aus der Gruppe bestehend aus Tris(ethylsalicylato)vinylsilan, Tris(ethylsalicylato)methylsilan, Tris(ethylsalicylato)propylsilan, Tris(2-ethylhexylsalicylato)vinylsilan, Tris(2-ethylhexylsalicylato)methylsilan und Tris(2-ethylhexylsalicylato)propylsilan. Die Verbindung R⁹ᵤSi(R)₄₋ᵤ kann insbesondere ausgewählt sein aus der Gruppe bestehend aus Tris(ethylsalicylato)methylsilan, Tris(ethylsalicylato)propylsilan, Tris(2-ethylhexylsalicylato)methylsilan und Tris(2-ethylhexylsalicylato)propylsilan.

Besteht der Härter in der erfindungsgemäßen Zusammensetzung aus den beiden Verbindungen R¹ₘSi(R)₄₋ₘ und R⁹ᵤSi(R)₄₋ᵤ, so besteht der Härter bevorzugt zu 5 bis 70 Gew.-%, weiter bevorzugt zu 10 bis 60 Gew.-%, besonders bevorzugt zu 10 bis 55 Gew.-%, jeweils bezogen auf das Gesamtgewicht des erfindungsgemäßen Härters, aus der Verbindung R¹ₘSi(R)₄₋ₘ und bevorzugt zu 30 bis 95 Gew.-%, .weiter bevorzugt, 40 bis 90 Gew.-%, besonders bevorzugt zu 45 bis 90 Gew.-%, jeweils bezogen auf das Gesamtgewicht des Härters, aus der Verbindung R⁹ᵤSi(R)₄₋ᵤ. Gemäß einer Ausführungsform der Erfindung besteht der Härter in der erfindungsgemäßen Zusammensetzung zu 50 Gew.-% aus der Verbindung R¹ₘSi(R)₄₋ₘ und zu 50 Gew.-% aus der Verbindung R⁹ᵤSi(R)₄₋ᵤ, jeweils bezogen auf das Gesamtgewicht des erfindungsgemäßen Härters.

Der erfindungsgemäße Härter kann jedoch auch nur aus der Verbindung R¹ₘSi(R)₄₋ₘ bestehen. In diesem Falle besteht der erfindungsgemäße Härter zu 100 Gew.-% aus der Verbindung R¹ₘSi(R)₄₋ₘ, bezogen auf das Gesamtgewicht des erfindungsgemäßen Härters. Dementsprechend kann der erfindungsgemäße Härter in der erfindungsgemäßen Zusammensetzung zu 100 Gew.-% aus der Verbindung R¹ₘSi(R)₄₋ₘ, bezogen auf das Gesamtgewicht des erfindungsgemäßen Härters, bestehen.

Die erfindungsgemäße Zusammensetzung kann ferner bevorzugt 1 bis 20 Gew.-%, weiter bevorzugt 3 bis 17 Gew.-%, besonders bevorzugt 4 bis 15 Gew.-% Füllstoff umfassen, jeweils bezogen auf das Gesamtgewicht der erfindungsgemäßen Zusammensetzung.

Ferner kann die erfindungsgemäße Zusammensetzung bevorzugt 0,001 bis 2 Gew.-%, weiter bevorzugt 0,005 bis 1 Gew.-%, besonders bevorzugt 0,01 bis 1 Gew.-% Katalysator umfassen, jeweils bezogen auf das Gesamtgewicht der erfindungsgemäßen Zusammensetzung. Gemäß einer weiteren Ausführungsform kann die Zusammensetzung im Wesentlichen frei von Katalysatoren, insbesondere von metallorganischen Katalysatoren wie Organozinnverbindungen, sein.

Die erfindungsgemäße Zusammensetzung kann bevorzugt 0,1 bis 5 Gew.-%, weiter bevorzugt 0,5 bis 4 Gew.-%, besonders bevorzugt 1 bis 3 Gew.-% des Haftvermittlers umfassen, jeweils bezogen auf das Gesamtgewicht der erfindungsgemäßen Zusammensetzung. Dabei sind in diesem Gehalt sämtliche Haftvermittler zusammengefasst, die jeweils in beliebigen Gewichtsverhältnissen, z.B. 1:1, 2:1, 3:1 oder 4:1, enthalten sein können.

Gegenstand der Erfindung ist weiterhin ein Dichtungsmittel, ein Klebstoff, eine Vergussmasse oder ein Beschichtungsmittel enthaltend die erfindungsgemäße Zusammensetzung.

Ebenfalls ist Gegenstand der Erfindung eine Verwendung der erfindungsgemäßen Zusammensetzung als Dichtungsmittel, Klebstoff oder Beschichtungsmittel. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

Gegenstand der Erfindung ist ferner die Verwendung eines Haftvermittlers, der die allgemeine Strukturformel (III) 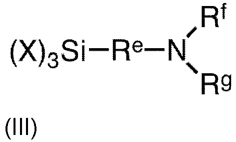 aufweist,
wobei
R^{e} -(CH₂)ₛ- bedeutet, wobei s eine ganze Zahl von 1 bis 10 ist,
R^{f} H, eine optional substituierte C1- bis C16-Alkylgruppe oder Rⁱ bedeutet,
R^{g} eine optional substituierte C2- bis C16-Alkylgruppe, Rⁱ oder -C(O)-R^{h} bedeutet,
   wobei R^{f} nur H bedeutet, wenn R^{g} -C(O)-R^{h} bedeutet, und
   wobei R^{h} eine optional substituierte, geradkettige oder verzweigte C1- bis C16-Alkoxygruppe, -O-Rⁱ, eine optional substituierte, geradkettige oder verzweigte C1-bis C16-Alkylgruppe, Rⁱ oder -CHMe-O-C(O)-Me bedeutet,
      oder wobei R^{f} und R^{g} zusammen mit dem Atom, an das sie gebunden sind, ein optional substituiertes, heterocyclisches Ringsystem mit 3 bis 14 C-Atomen und 1 bis 5 Heteroatomen, ausgewählt aus der Gruppe bestehend aus N und O bilden, und
   jeder Rⁱ unabhängig voneinander ein optional substituiertes cyclisches Ringsystem mit 4 bis 14 C-Atomen oder eine optional substituierte aromatische Gruppe mit 4 bis 14 C-Atomen bedeutet,
   oder Oligomere oder Polymere der Strukturformel (III),
   als Haftvermittler in Silikonkautschukmassen.

Gemäß einer Ausführungsform der erfindungsgemäßen Verwendung ist der Haftvermittler ein wie hierin beschriebener Haftvermittler. Demgemäß gilt für die Reste R^{a}, R^{b}, R^{c}, R^{d}, R^{e}, R^{f}, R^{g}, R^{h}, Rⁱ und R^{k} insbesondere das voranstehend Gesagte. Ferner kann in der erfindungsgemäßen Verwendung die Zusammensetzung einen weiteren Haftvermittler mit der allgemeinen Strukturformel (R^{#}O)₃Si(CH₂)ₜNR^{y}R^{z} enthalten, wobei R^{#}, R^{y} und R^{z} unabhängig voneinander eine optional substituierte, geradkettige oder verzweigte C1- bis C16-Alkylgruppe, ein optional substituiertes cyclisches Ringsystem mit 4 bis 14 C-Atomen oder eine optional substituierte aromatische Gruppe mit 4 bis 14 C-Atomen bedeuten und t eine ganze Zahl von 1 bis 10 ist, oder wobei der weitere Haftvermittler insbesondere ausgewählt ist aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropoxysilan.

Gegenstand der Erfindung ist ferner eine Verbindung mit der Strukturformel (IV)

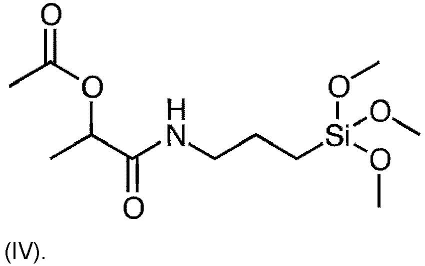

Diese Verbindung kann insbesondere als Haftvermittler in erfindungsgemäßen Zusammensetzungen verwendet werden.

Im Folgenden wird die Erfindung an konkreten, nicht limitierenden Beispielen veranschaulicht.

### Beispiele:

### Haftvermittler-Synthese

Als Haftvermittler werden bevorzugt kommerziell erhältliche Verbindungen N,N'-Bis(trimethoxysilylpropyl)harnstoff ((TMSP)2H, CAS-Nr. 69465-84-5); Tris(triethoxysilylpropyl)diethylentriharnstoff ((TESP)3DETH, CAS-Nr. 144526-47-6); 1,3,5-Tris(trimethoxysilylpropyl)-isocyanurat ((TMSP)3ICN, CAS-Nr. 26115-70-8); Dimethylaminopropyltrimethoxysilan (DMAPTMS, CAS-Nr. 2530-86-1); N-Methyl(3-(Trimethoxysilyl)-propyl)-carbamat (TMSPC, CAS-Nr. 23432-62-4); N-Ethyl(3-(Triethoxysilyl)-propyl)-carbamat (TESPC; CAS-Nr. 17945-05-0) eingesetzt, deren Synthese dem Fachmann bekannt ist.

Des Weiteren wurde N-Trimethoxypropylsilyl-2-acetoxypropionsäureamid (**TMSPAPA**) als Haftvermittler eingesetzt, dessen Synthese im Folgenden beschrieben wird.

### Beispiel 1

### Synthese von TMSPAPA

In einem 1 L-Vierhalskolben mit Flügelrührer und Rückflusskühler werden unter Stickstoffatmosphäre 35.00 g (1.0 eq 0.33 mol) 2-(*S*)-Acetoxypropionsäurechlorid in 282.20 g Toluol vorgelegt und unter Rühren eine Mischung aus 64.19 g (1.1 eq, 0.36 mol) Aminopropyltrimethoxysilan, 36.20 g (1.1 eq, 0.36 mol) Triethylamin, sowie 310.40 g Toluol so zugetropft, dass die Temperatur nicht über 30°C ansteigt. Nach zwei Stunden Reaktionszeit wird die Reaktionsmischung filtriert und das Toluol unter verminderten Druck entfernt. Dem Rohprodukt werden zweimal je 1.80 g (18.10 mmol) Cyclohexylamin zugegeben und jeweils nach vierstündiger Einwirkdauer unter Rühren filtriert. Es werden so 84.20 g (0.29 mol, 87 %) des gewünschten Produktes N-Trimethoxypropylsilyl-2-(*S*)-acetoxypropionsäureamid erhalten.

### Stabilitätsprüfung

Für die Stabilitätsprüfung wurden Proben folgender Grundzusammensetzung für Dichtstoffformulierungen durch Mischen unter Vakuum hergestellt:

| | |
|---|---|
| 575 g | alpha,omega-dihydroxyl-terminiertes Polydimethylsiloxan mit Viskosität 80.000 cSt |
| 260 g | Polydimethylsiloxan mit Viskosität 100 cSt |
| 90 g | Unbehandelte Pyrogene Kieselsäure |
| 0,2 g | Katalysator: Alkylzinndicarboxylat |

Proben dieser Grundzusammensetzung wurden jeweils unterschiedliche Kombinationen aus Haftvermittler und Härter gemäß den untenstehenden Tabellen 1 bis 4 durch Mischen unter Vakuum zugesetzt. Dabei wurden jeweils 15 g des Haftvermittlers und 60 g des Härters zu gesetzt. Proben der resultierenden Formulierungen wurden bei 60°C über einen längeren Zeitraum gelagert, wobei sie in regelmäßigen Abständen auf ihre Zusammensetzung und ihre Funktionalität als Dichtstoff überprüft wurden. Bei ungenügender Funktionalität (beispielsweise ungenügendes Haftvermögen auf Glas, Aluminium, PVC, Blech, Stahl oder Holz oder ungenügende Vernetzung) oder bei starker Veränderung der Zusammensetzung wurde der Stabilitätstest für diese Formulierung zu diesem Zeitpunkt abgebrochen.

In den untenstehenden Tabellen haben die Abkürzungen folgende Bedeutungen:
HVM, Haftvermittler; Mo, Monat; M(EL)3, Tris(ethyllactato)methylsilan; M(BL)3, Tris(butyllactato)methylsilan; M(SEE)3, Tris(ethylsalicylato)methylsilan; M(SEHE)3, Tris(2-ethylhexylsalicylato)methylsilan; (TMSP)2H, N,N'-Bis(trimethoxysilylpropyl)harnstoff; (TESP)3DETH, Tris(triethoxysilylpropyl)diethylentriharnstoff; (TMSP)3ICN, 1,3,5-Tris(trimethoxysilylpropyl)-isocyanurat; DMAPTMS, Dimethylaminopropyltrimethoxysilan; TMSPC, N-Methyl(3-(Trimethoxysilyl)-propyl)-carbamat; TESPC, N-Ethyl(3-(Triethoxysilyl)-propyl)-carbamat; AMEO, 3-Aminopropyltriethoxysilan; DAMO, Aminoethylaminopropyltrimethoxysilan.

**Tabelle 1**

| Beispiel | 2 | 3 | 4 | 5 | 6 | 7 |
|---|---|---|---|---|---|---|
| Härter | M(EL)3 | M(BL)3 | M(SEE)3 | M(SEHE)3 | M(EL)3 | M(BL)3 |

| HVM | TESPC | TESPC | TESPC | TESPC | TMSPAPA | TMSPAPA |
|---|---|---|---|---|---|---|
| Stabilität | > 9 Mo | > 9 Mo | > 12 Mo | > 12 Mo | > 9 Mo | > 9 Mo |

**Tabelle 2**

| Beispiel | 8 | 9 | 10 | 11 | 12 |
|---|---|---|---|---|---|
| Härter | M(SEE)3 | M(SEHE)3 | M(EL)3 | M(BL)3 | M(SEE)3 |
| HVM | TMSPAPA | TMSPAPA | (TMSP)3ICN | (TMSP)3ICN | (TMSP)3ICN |
| Stabilität | > 12 Mo | > 12 Mo | > 12 Mo | > 12 Mo | > 12 Mo |

**Tabelle 3**

| Beispiel | 13 | 14 | 15 | 16 | 17 | 18 |
|---|---|---|---|---|---|---|
| Härter | M(SEHE)3 | M(BL)3 | M(SEE)3 | M(SEHE)3 | M(SEE)3 | M(SEHE)3 |
| HVM | (TMSP)3ICN | TMSPC | TMSPC | TMSPC | (TMSP)2H | (TMSP)2H |
| Stabilität | > 12 Mo | > 9 Mo | > 12 Mo | > 12 Mo | > 12 Mo | > 12 Mo |

**Tabelle 4 (Vergleichsbeispiele)**

| Beispiel | 19 | 20 |
|---|---|---|
| Härter | M(SEHE)3 | M(SEHE)3 |
| HVM | AMEO | DAMO |
| Stabilität | 2 Mo | 2 Mo |

Die Ergebnisse der Stabilitätsprüfung zeigen, dass Dichtstoffformulierungen mit erfindungsgemäßen Haftvermittler, insbesondere in Kombination mit den erfindungsgemäßen Härtern, eine höhere Stabilität aufweisen als Dichtstoffformulierungen mit üblichen Haftvermittlern, die primäre oder sekundäre Amine enthalten.

### Dichtstoffformulierungen

Es wurden weitere Dichtstoffformulierungen hergestellt und getestet.

Die Produkteigenschaften Hautbildungszeit, Klebfreizeit, Durchhärtung und Reißdehnung der Silikonkautschukmischungen (Dichtstoffformulierungen) wurden nach Ausbringung der Dichtstoffe nach üblichen Verfahren bestimmt. So weit nicht anders angegeben wurden die Messungen bei 23°C und 50% Luftfeuchtigkeit durchgeführt.

Die Hautbildungszeit gibt dabei die Zeit an, zu der nach Ausbringung des Dichtstoffs an der Oberfläche eines Probenstranges eine vollständige Schicht aus verfestigtem Material (Haut) beobachtet wurde. Die Klebfreizeit gibt die Zeit an, zu der die Oberfläche eines Probenstranges keine Klebrigkeit mehr aufweist. Zur Bestimmung der vollständigen Aushärtung wird der Dichtstoff mit 9 mm Höhe auf eine Glasplatte aufgetragen und die Zeitdauer der Durchhärtung bis zur Glasplatte gemessen. Die Reißdehnung wurde gemäß DIN EN ISO 8339:2005-09 bestimmt.

### Beispiel 21

### Dichtstoffrezeptur A

Es wird eine Dichtstoffrezeptur A gemäß folgender Formulierung hergestellt:

| | |
|---|---|
| 580 g | alpha,omega-dihydroxyl-terminiertes Polydimethylsiloxan mit Viskosität 80.000 cSt |
| 260 g | Polydimethylsiloxan mit Viskosität 100 cSt |
| 1 g | Aminoalkyltrialkoxysilan |
| 91 g | Unbehandelte Pyrogene Kieselsäure |
| 0,2 g | Katalysator: Alkyl-zinn-carboxylat |

Zur Herstellung einer Silikonkautschukmischung wird zu der Dichtstoffrezeptur A ein Lactathärter/Haftvermittlergemisch B unter Vakuum zugegeben:

| | |
|---|---|
| 20 g | Vinyl-tris(ethyllactato)silan |
| 20 g | Methyl-tris(ethyllactato)silan |
| 9 g | Haftvermittler: Dialkylaminoalkyltrialkoxysilan (erfindungsgemäßer Haftvermittler) |

Der resultierende Dichtstoff war transparent und farblos und wies eine Hautbildungszeit von 10 Minuten, eine Klebfreizeit von 45 Minuten und eine vollständige Durchhärtung auf Glas (Dichtstoff 9 mm dick auf einer Glasplatte aufgetragen) nach 7 Tagen auf. Ferner zeigte der Dichtstoff eine gute Haftung auf Glas, Aluminium, PVC, Blech, Stahl, Holz lackiert, Polyamid und Al/Mg-Legierung auf. Auch nach Lagerung des Dichtstoffes bei 70°C für 10 Tage war der Dichtstoff stabil und farblos.

### Beispiel 21 (Stand der Technik; vgl. EP 2 030 976 A1, Beispiel 7)

Zur Herstellung einer Silikonkautschukmischung wird zu der Dichtstoffrezeptur A ein Lactathärter/Haftvermittlergemisch C unter Vakuum zugegeben:

| | |
|---|---|
| 20 g | Vinyl-tris(ethyllactato)silan |
| 20 g | Methyl-tris(ethyllactato)silan |
| 9 g | Haftvermittler: Aminoalkyltrialkoxysilan |

Der resultierende Dichtstoff hat nach Ausbringung an Luft
- eine Hautbildungszeit von 12 min
- eine Klebfreizeit von 60 min
- ein transparentes Aussehen
- eine Shore-Härte A von 22

Der Dichtstoff war nicht lagerstabil.

### Beispiel 22

Es wurde eine Siliconkautschukmischung gemäß der folgenden Zusammensetzung durch Mischen der Komponenten unter Vakuum hergestellt:

| | |
|---|---|
| 540 g | alpha,omega-dihydroxyl-terminiertes Polydimethylsiloxan mit Viskosität 80.000 cSt |
| 310 g | Polydimethylsiloxan mit Viskosität 100 cSt |
| 28 g | Härter 1: Methyl-tris(diethyllactamido)silan |
| 20 g | Härter 2: Vinyl-tris(diethyllactamido)silan |
| 1 g | Aminoalkyltrialkoxysilan |
| 96 g | Unbehandelte Pyrogene Kieselsäure |
| 1,2 g | Katalysator: 1:1 (w/w) Mischung aus Dialkylzinnoxid und Tetraalkoxysilan |
| 10 g | Haftvermittler: Dialkylaminoalkyltrialkoxysilan |

Der resultierende Dichtstoff war transparent und farblos und wies eine Hautbildungszeit von 10 Minuten, eine Klebfreizeit von 50 Minuten und eine vollständige Durchhärtung auf Glas (Dichtstoff 9 mm dick auf einer Glasplatte aufgetragen) nach 7 Tagen auf. Ferner war der Dichtstoff geruchlos und zeigte eine gute Haftung auf Glas, Aluminium, PVC, Blech, Stahl Holz, Holz lackiert, Holz lasiert, Polyamid und Al/Mg-Legierung auf. Auch nach Lagerung des Dichtstoffes bei 60°C für 4 Wochen war der Dichtstoff stabil und farblos.

### Beispiel 23

Es wurde eine Siliconkautschukmischung gemäß der folgenden Zusammensetzung durch Mischen der Komponenten unter Vakuum hergestellt:

| | |
|---|---|
| 504 g | alpha,omega-dihydroxyl-terminiertes Polydimethylsiloxan mit Viskosität 80.000 cSt |
| 356 g | Polydimethylsiloxan mit Viskosität 100 cSt |
| 17 g | Härter 1: Tris(butylglycolato)vinylsilan |
| 34 g | Härter 2: Tris(butylglycolato)methylsilan |
| 67g | Unbehandelte Pyrogene Kieselsäure |
| 2 g | Katalysator: Dialkylzinndicarboxylat |
| 16 g | Haftvermittler: 1:1 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 4 Minuten, eine Klebfreizeit von 26 Minuten und eine Durchhärtung auf Glas (Dichtstoff 9 mm dick auf einer Glasplatte aufgetragen) von 5 Tagen auf. Die Reißdehnung wurde zu 210% bestimmt. Der Dichtstoff wies einen angenehmen Geruch sowie eine gute Haftung auf Glas, Aluminium, PVC, Blech, Stahl und Holz auf. Nach Lagerung des Dichtstoffes bei 60°C für 4 Wochen war der Dichtstoff stabil und zeigte eine nur geringfügige leicht gelbliche Verfärbung.

### Beispiel 24

Es wurde eine Siliconkautschukmischung gemäß der folgenden Zusammensetzung durch Mischen der Komponenten unter Vakuum hergestellt:

| | |
|---|---|
| 504 g | alpha,omega-dihydroxyl-terminiertes Polydimethylsiloxan mit Viskosität 80.000 cSt |
| 326 g | Polydimethylsiloxan mit Viskosität 100 cSt |
| 12 g | Härter 1: Tris(2-ethylhexylsalicylato)vinylsilan |
| 34 g | Härter 2: Tris(2-ethylhexylsalicylato)methylsilan |
| 1 g | Aminoalkyltrialkoxysilan |
| 73g | Unbehandelte Pyrogene Kieselsäure |
| 0,5 | Katalysator: 1:1 (w/w) Mischung aus Dialkylzinnoxid und Tetraalkoxysilan |
| 16 g | Haftvermittler: 1:1 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 5 Minuten, eine Klebfreizeit von 17 Minuten und eine Durchhärtung auf Glas (Dichtstoff 9 mm dick auf einer Glasplatte aufgetragen) von 5 Tagen auf. Die Reißdehnung wurde zu 240% bestimmt. Der Dichtstoff wies einen angenehmen Geruch sowie eine gute Haftung auf Glas, Aluminium, PVC, Blech, Stahl und Holz auf. Nach Lagerung des Dichtstoffes bei 60°C für 4 Wochen war der Dichtstoff stabil und farblos.

### Beispiel 25

Es wurde eine Siliconkautschukmischung gemäß der folgenden Zusammensetzung durch Mischen der Komponenten unter Vakuum hergestellt:

| | |
|---|---|
| 498 g | alpha,omega-dihydroxyl-terminiertes Polydimethylsiloxan mit Viskosität 80.000 cSt |
| 353 g | Polydimethylsiloxan mit Viskosität 100 cSt |
| 50 g | Härter: Tris(ethyllactato)vinylsilan |
| 4 g | Aminoalkyltrialkoxysilan |
| 73g | Unbehandelte Pyrogene Kieselsäure |
| 2 g | Katalysator: Dialkylzinndicarboxylat |
| 20 g | Haftvermittler: 2:3 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 11 Minuten, eine Klebfreizeit von 45 Minuten und eine Durchhärtung auf Glas (Dichtstoff 9 mm dick auf einer Glasplatte aufgetragen) von 4 Tagen auf. Die Reißdehnung wurde zu 210% bestimmt. Der Dichtstoff wies einen angenehmen Geruch sowie eine gute Haftung auf Glas, Aluminium, PVC, Blech, Stahl und Holz auf. Nach Lagerung des Dichtstoffes bei 60°C für 4 Wochen war der Dichtstoff stabil und zeigte eine nur geringfügige leicht gelbliche Verfärbung.

### Beispiel 26

Es wurde eine Siliconkautschukmischung gemäß der folgenden Zusammensetzung durch Mischen der Komponenten unter Vakuum hergestellt:

| | |
|---|---|
| 504 g | alpha,omega-dihydroxyl-terminiertes Polydimethylsiloxan mit Viskosität 80.000 cSt |
| 328 g | Polydimethylsiloxan mit Viskosität 100 cSt |
| 13 g | Härter 1: Tris(ethylsalicylato)vinylsilan |
| 52 g | Härter 2: Tris(ethylsalicylato)propylsilan |
| 1 g | Aminoalkyltrialkoxysilan |
| 85 g | Unbehandelte Pyrogene Kieselsäure |
| 1 g | Katalysator: 1:1 (w/w) Mischung aus Dialkylzinnoxid und Tetraalkoxysilan |
| 16 g | Haftvermittler: 1:1 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 5 Minuten, eine Klebfreizeit von 27 Minuten und eine Durchhärtung auf Glas (Dichtstoff 9 mm dick auf einer Glasplatte aufgetragen) von 7 Tagen auf. Die Reißdehnung wurde zu 325% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 27

Es wurde eine Siliconkautschukmischung gemäß der folgenden Zusammensetzung durch Mischen der Komponenten unter Vakuum hergestellt:

| | |
|---|---|
| 504 g | alpha,omega-dihydroxyl-terminiertes Polydimethylsiloxan mit Viskosität 80.000 cSt |
| 328 g | Polydimethylsiloxan mit Viskosität 100 cSt |
| 65 g | Härter: Tris(ethylsalicylato)propylsilan |
| 1 g | Aminoalkyltrialkoxysilan |
| 85 g | Unbehandelte Pyrogene Kieselsäure |
| 1 g | Katalysator: 1:1 (w/w) Mischung aus Dialkylzinnoxid und Tetraalkoxysilan |
| 16 g | Haftvermittler: 1:1 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 13 Minuten, eine Klebfreizeit von 32 Minuten und eine Durchhärtung auf Glas (Dichtstoff 9 mm dick auf einer Glasplatte aufgetragen) von 6 Tagen auf. Die Reißdehnung wurde zu 340% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 28

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Tris(trialkoxysilylalkyl)dialkylendiharnstoff |

Der resultierende Dichtstoff war transparent und farblos und wies eine Hautbildungszeit von 15 Minuten, eine Klebfreizeit von 60 Minuten und eine Durchhärtung auf Glas (Dichtstoff 9 mm dick auf einer Glasplatte aufgetragen) von 6 Tagen auf. Die Reißdehnung wurde zu 370% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 29

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 16 Minuten, eine Klebfreizeit von 38 Minuten und eine Durchhärtung auf Glas (Dichtstoff 9 mm dick auf einer Glasplatte aufgetragen) von 7 Tagen auf. Die Reißdehnung wurde zu 310% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 30

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Tris(trialkoxysilylalkyl)dialkylendiharnstoff |

Der resultierende Dichtstoff war transparent und farblos und wies eine Hautbildungszeit von 20 Minuten, eine Klebfreizeit von 100 Minuten und eine Durchhärtung auf Glas (Dichtstoff 9 mm dick auf einer Glasplatte aufgetragen) von 7 Tagen auf. Die Reißdehnung wurde zu 370% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 31

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Bis(trialkoxysilylalkyl)harnstoff |

Der resultierende Dichtstoff war transparent und farblos und wies eine Hautbildungszeit von 14 Minuten, eine Klebfreizeit von 60 Minuten und eine Durchhärtung auf Glas (Dichtstoff 9 mm dick auf einer Glasplatte aufgetragen) von 12 Tagen auf. Die Reißdehnung wurde zu 280% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und zeigte eine nur geringfügige leicht gelbliche Verfärbung.

### Beispiel 32

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und N-Alkyl(3-(Trialkoxysilyl)-propyl)-carbamat |

Der resultierende Dichtstoff war transparent und farblos und wies eine Hautbildungszeit von 12 Minuten, eine Klebfreizeit von 50 Minuten und eine Durchhärtung auf Glas (Dichtstoff 9 mm dick auf einer Glasplatte aufgetragen) von 9 Tagen auf. Die Reißdehnung wurde zu 250% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 33

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Bis(trialkoxysilylalkyl)harnstoff |

Der resultierende Dichtstoff war transparent und farblos und wies eine Hautbildungszeit von 11 Minuten, eine Klebfreizeit von 50 Minuten und eine Durchhärtung auf Glas (Dichtstoff 9 mm dick auf einer Glasplatte aufgetragen) von 7 Tagen auf. Die Reißdehnung wurde zu 300% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

## Patentansprüche

1. Zusammensetzung enthaltend
a. einen Härter für Silikonkautschukmassen enthaltend eine Verbindung mit der allgemeinen Strukturformel R¹ₘSi(R)₄₋ₘ,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituiert C4-bis C14-Arylgruppe bedeutet,
m eine ganze Zahl von 0 bis 2 ist,
jeder R unabhängig voneinander ausgewählt ist aus der Gruppe bestehend aus
- einem Hydroxycarbonsäureesterrest mit der allgemeinen Strukturformel (I): 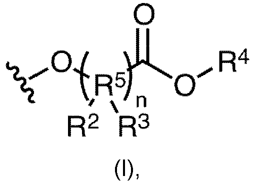 wobei
jeder R² unabhängig voneinander H oder eine optional substituierte, geradkettige oder verzweigte C1- bis C16-Alkylgruppe oder eine C4- bis C14-Arylgruppe bedeutet,
jeder R³ unabhängig voneinander H oder eine optional substituierte, geradkettige oder verzweigte C1- bis C16-Alkylgruppe oder eine C4- bis C14-Arylgruppe bedeutet,
R⁴ eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
R⁵ C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen bedeutet, und
n eine ganze Zahl von 1 bis 10 ist,
- -O-C(O)-R⁶, wobei R⁶ H, eine C1- bis C16-Alkylgruppe, eine C4- bis C14-Cycloalkylgruppe oder eine C4- bis C14-Arylgruppe bedeutet und
- -O-N=CR⁷R⁸, wobei R⁷ und R⁸ unabhängig voneinander H, eine C1- bis C16-Alkylgruppe, eine C4- bis C14-Cycloalkylgruppe oder eine C4- bis C14-Arylgruppe bedeuten,
und
b. einen Haftvermittler, der die allgemeine Strukturformel (II) oder (III) 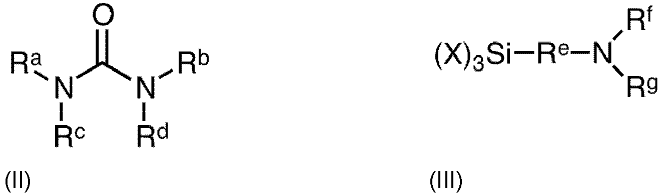 aufweist,
wobei
R^{a} eine optional substituierte geradkettige oder verzweigte C1- bis C16-Alkylgruppe oder -(CH₂)ₗ-Si(X)₃ bedeutet, wobei I eine ganze Zahl von 1 bis 10 ist,
R^{b} -(CH₂)ₒ-Si(X)₃ oder R^{k}-N(C(O)-NH-(CH₂)ₚ-Si(X)₃)-R^{k}-NH-C(O)-NH-(CH₂)_{q}-Si(X)₃ bedeutet, wobei jeder R^{k} unabhängig voneinander -(CH₂)ᵣ- bedeutet, o eine ganze Zahl von 1 bis 10 ist, r eine ganze Zahl von 1 bis 8, insbesondere 2, ist und p und q unabhängig voneinander eine ganze Zahl von 1 bis 10 sind,
R^{c} und R^{d} unabhängig voneinander H, eine optional substituierte geradkettige oder verzweigte C1- bis C16-Alkylgruppe oder Rⁱ bedeuten oder R^{c} und R^{d} zusammen mit den Atomen, an die sie gebunden sind, und der zwischen diesen Atomen eingeschlossenen Carbonylgruppe einen 5- bis 8-gliedrigen Ring mit 1 bis 4 Heteroatomen, ausgewählt aus der Gruppe bestehend aus N, O und S, und 1 bis 4 Carbonylgruppen bilden, wobei der Ring optional mit einem weiteren R^{a} substituiert ist,
jedes X unabhängig voneinander ausgewählt ist aus der Gruppe bestehend aus -OMe, -OEt, -OⁱPr, -OⁿPr, -OⁿBu, -O^{sec}Bu, -O^{iso}Bu, -O^{t}Bu, -OPh und R, wobei R wie gemäß unter a. definiert ist,
R^{e} -(CH₂)ₛ- bedeutet, wobei s eine ganze Zahl von 1 bis 10 ist,
R^{f} H, eine optional substituierte C1- bis C16-Alkylgruppe oder Rⁱ bedeutet,
R^{g} eine optional substituierte C2- bis C16-Alkylgruppe, Rⁱ oder -C(O)-R^{h} bedeutet,
wobei R^{f} nur dann H bedeutet, wenn R^{g} -C(O)-R^{h} bedeutet, und
wobei R^{h} eine optional substituierte, geradkettige oder verzweigte C1- bis C16-Alkoxygruppe, -O-Rⁱ, eine optional substituierte, geradkettige oder verzweigte C1- bis C16-Alkylgruppe, Rⁱ oder -CHMe-O-C(O)-Me bedeutet,
oder wobei R^{f} und R^{g} zusammen mit dem Atom, an das sie gebunden sind, ein optional substituiertes, heterocyclisches Ringsystem mit 3 bis 14 C-Atomen und 1 bis 5 Heteroatomen, ausgewählt aus der Gruppe bestehend aus N und O bilden, und
jeder Rⁱ unabhängig voneinander ein optional substituiertes cyclisches Ringsystem mit 4 bis 14 C-Atomen oder eine optional substituierte aromatische Gruppe mit 4 bis 14 C-Atomen bedeutet,
oder Oligomere oder Polymere der Strukturformeln (II) und (III).

2. Zusammensetzung mindestens enthaltend eine Mischung erhältlich durch Vermischen mindestens eines Härters gemäß Anspruch 1 a. mit mindestens einem Haftvermittler gemäß Anspruch 1 b.

3. Zusammensetzung nach Anspruch 1 oder 2, **dadurch gekennzeichnet, dass** R^{c} und R^{d} unabhängig voneinander H oder eine geradkettige oder verzweigte C1- bis C8-Alkylgruppe bedeuten oder R^{c} und R^{d} zusammen mit den Atomen, an die sie gebunden sind, und der zwischen diesen Atomen eingeschlossenen Carbonylgruppe einen 6-gliedrigen Ring mit 1 bis 4, insbesondere 3, Heteroatomen, ausgewählt aus der Gruppe bestehend aus N, O und S, insbesondere N, und 1 bis 4, insbesondere 3, Carbonylgruppen bilden, wobei der Ring insbesondere mit einem weiteren R^{a} substituiert ist
und/oder
R^{a} -(CH₂)ₗ-Si(X)₃ bedeutet, wobei I und X gemäß Anspruch 1 definiert sind und/oder R^{f} H oder eine optional substituierte geradkettige oder verzweigte C1- bis C16-Alkylgruppe bedeutet und/oder R^{g} eine optional substituierte geradkettige oder verzweigte C2- bis C16-Alkylgruppe oder -C(O)-R^{h}, insbesondere -C(O)-R^{h}, bedeutet und/oder R^{h} eine optional substituierte geradkettige oder verzweigte C1- bis C16-Alkoxygruppe, eine optional substituierte geradkettige oder verzweigte C1- bis C16-Alkylgruppe oder - CHMe-O-C(O)-Me bedeutet, wobei R^{f} nur dann H bedeutet, wenn R^{g} -C(O)-R^{h} bedeutet.

4. Zusammensetzung nach einem der vorstehenden Ansprüche, **dadurch gekennzeichnet, dass** die Zusammensetzung weniger als 5 Gew.-%, insbesondere weniger als 4 Gew.-% oder weniger als 3 Gew.-% oder weniger als 2 Gew.-% oder weniger als 1 Gew.-% oder weniger als 0,5 Gew.-%, jeweils bezogen auf das Gesamtgewicht der Zusammensetzung, an Verbindungen mit -NHR^{x}-Gruppen enthält, wobei R^{x} H oder eine C1- bis C10- Alkylgruppe, insbesondere eine geradkettige C1- bis C4- Alkylgruppe, oder eine C4- bis C10-Cycloalkylgruppe oder eine C4- bis C12-Arylgruppe bedeutet,
und/oder
der Haftvermittler ausgewählt ist aus der Gruppe bestehend aus N-Methyl(3-(trimethoxysilyl)-propyl)-carbamat, N-Ethyl(3-(triethoxysilyl)-propyl)-carbamat, Trimethoxypropylsilylacetoxypropionsäureamid, N, N'-Bis(trimethoxysilylpropyl)harnstoff, Tris(triethoxysilylpropyl)diethylentriharnstoff, 1,3,5-Tris(trimethoxysilylpropyl)-isocyanurat, Diethylaminopropyltrimethoxysilan, Dipropylaminopropyltrimethoxysilan und Dibutylaminotrimethoxysilan,
und/oder
die Zusammensetzung einen weiteren Haftvermittler gemäß einem der Ansprüche 1 bis 3 oder mit der allgemeinen Strukturformel (R^{#}O)₃Si(CH₂)ₜNR^{y}R^{z}, wobei R^{#}, R^{y} und R^{z} unabhängig voneinander eine optional substituierte, geradkettige oder verzweigte C1-bis C16-Alkylgruppe, ein optional substituiertes cyclisches Ringsystem mit 4 bis 14 C-Atomen oder eine optional substituierte aromatische Gruppe mit 4 bis 14 C-Atomen bedeuten und t eine ganze Zahl von 1 bis 10 ist, insbesondere ausgewählt aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropoxysilan, enthält.

5. Zusammensetzung nach einem der vorstehenden Ansprüche, **dadurch gekennzeichnet, dass** in der allgemeinen Strukturformel R¹ₘSi(R)₄₋ₘ R ein Hydroxycarbonsäureesterrest mit der allgemeinen Strukturformel (I) ist, 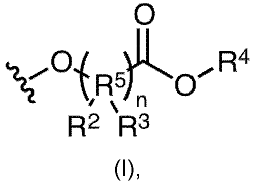 wobei R², R³, R⁴, R⁵ und n gemäß Anspruch 1 definiert sind,
und/oder
in der allgemeinen Strukturformel R¹ₘSi(R)₄₋ₘ jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet.

6. Zusammensetzung nach einem der vorstehenden Ansprüche, **dadurch gekennzeichnet, dass** in der allgemeinen Strukturformel R¹ₘSi(R)₄₋ₘ jeder R¹ unabhängig voneinander ein Methyl-, Ethyl-, Propyl-, Vinyl-, Phenyl- oder ein Allylrest bedeutet,
und/oder
im Hydroxycarbonsäureesterrest jeder R² und R³ unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, bedeuten,
und/oder
im Hydroxycarbonsäureesterrest jeder R² und R³ unabhängig voneinander ausgewählt sind aus der Gruppe bestehend aus H, Methyl-, Ethyl-, Propyl-, Isopropyl-, Butyl-, n-Butyl-, sec-Butyl-, iso-Butyl- und tert-Butyl-, insbesondere aus der Gruppe bestehend aus H und Methyl.

7. Zusammensetzung nach einem der vorstehenden Ansprüche, **dadurch gekennzeichnet, dass** im Hydroxycarbonsäureesterrest R⁴ eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe, eine C5- bis C11-Aralkylgruppe oder eine C4- bis C10-Arylgruppe bedeutet,
und/oder
im Hydroxycarbonsäureesterrest R⁴ ausgewählt ist aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-,
und/oder
im Hydroxycarbonsäureesterrest R⁵ ein divalenter Benzolrest ist oder R⁵ C und R² und R³ H oder R⁵ C und R² H und R³ Methyl- bedeuten,
und/oder
im Hydroxycarbonsäureesterrest n eine ganze Zahl von 1 bis 5, insbesondere von 1 bis 3, insbesondere 1, ist.

8. Zusammensetzung nach einem der vorstehenden Ansprüche, **dadurch gekennzeichnet, dass** in der allgemeinen Strukturformel R¹ₘSi(R)₄₋ₘ R ausgewählt ist aus der Gruppe bestehend aus einem Glykolsäureesterrest, einem Milchsäureesterrest und einem Salicylsäureesterrest, wobei R⁴ jeweils eine optional substituierte, geradkettige oder verzweigte C1- bis C16-Alkylgruppe, insbesondere eine optional substituierte, geradkettige oder verzweigte C1- bis C12- oder C1- bis C8-Alkylgruppe, eine C4- bis C14-Cycloalkylgruppe, insbesondere eine C4- bis C10-Cycloalkylgruppe, eine C5- bis C15-Aralkylgruppe, insbesondere eine C5- bis C11-Aralkylgruppe, oder eine C4- bis C14-Arylgruppe, insbesondere eine C4- bis C10-Arylgruppe, bedeutet,
und/oder
R⁴ ausgewählt ist aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

9. Zusammensetzung nach Anspruch 8 **dadurch gekennzeichnet, dass** der Härter ausgewählt ist aus der Gruppe bestehend aus Tris(methylsalicylato)vinylsilan, Tris(ethylsalicylato)vinylsilan, Tris(ethylhexylsalicylato)vinylsilan, Tris(2-ethylhexylsalicylato)vinylsilan, Tris(isopropylsalicylato)vinylsilan, Tris(methylsalicylato)methylsilan, Tris(ethylsalicylato)methylsilan, Tris(ethylhexylsalicylato)methylsilan, Tris(2-ethylhexylsalicylato)methylsilan, Tris(ethylsalicylato)propylsilan, Tris(ethylhexylsalicylato)propylsilan, Tris(2-ethylhexylsalicylato)propylsilan, Tris(isopropylsalicylato)propylsilan, Tris(methylsalicylato)ethylsilan, Tris(ethylsalicylato)ethylsilan, Tris(ethylhexylsalicylato)ethylsilan, Tris(2-ethylhexylsalicylato)ethylsilan, Tris(isopropylsalicylato)ethylsilan, Tris(methylsalicylato)phenylsilan, Tris(ethylsalicylato)phenylsilan, Tris(ethylhexylsalicylato)phenylsilan, Tris(2-ethylhexylsalicylato)phenylsilan, Tris(isopropylsalicylato)phenylsilan, Tetra(ethylhexylsalicylato)silan, Tetra(2-ethylhexylsalicylato)silan, Tetra(methylsalicylato)silan, Tetra(isopropylsalicylato)silan, Tetra(ethylsalicylato)silan und Mischungen davon.

10. Zusammensetzung nach einem der vorstehenden Ansprüche, **dadurch gekennzeichnet, dass** der Härter zusätzlich eine Verbindung mit der allgemeinen Strukturformel R⁹ᵤSi(R)₄₋ᵤ enthält, wobei jeder R⁹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituiert C4- bis C14-Arylgruppe, insbesondere eine Methylgruppe, bedeutet, R gemäß einem der Ansprüche 1 bis 9 definiert ist und u eine ganze Zahl von 0 bis 2 ist.

11. Zusammensetzung enthaltend
a. einen Härter für Silikonkautschukmassen enthaltend eine Verbindung mit der allgemeinen Strukturformel R¹ₘSi(R)₄₋ₘ, wobei m eine ganze Zahl von 0 bis 2 ist und jeder R¹ und R unabhängig voneinander gemäß einem der Ansprüche 1 oder 5 bis 8 definiert sind oder der Härter ein Härter gemäß einem der Ansprüche 9 oder 10 ist,
b. einen ersten Haftvermittler, der die allgemeine Strukturformel (II) oder (III) 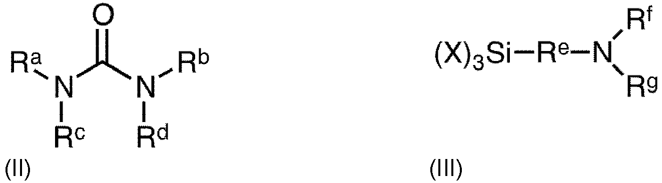 aufweist, wobei R^{a}, R^{b}, R^{c}, R^{d}, R^{e}, R^{f}, R^{g}, R^{h}, Rⁱ und R^{k} gemäß einem der Ansprüche 1 bis 3 definiert sind oder der erste Haftvermittler ein Haftvermittler gemäß Anspruch 4 ist und
c. einen zweiten Haftvermittler mit der allgemeinen Strukturformel (R^{#}O)₃Si(CH₂)ₜNR^{y}R^{z}, wobei R^{#}, R^{y} und R^{z} unabhängig voneinander eine optional substituierte, geradkettige oder verzweigte C1- bis C16-Alkylgruppe, ein optional substituiertes cyclisches Ringsystem mit 4 bis 14 C-Atomen oder eine optional substituierte aromatische Gruppe mit 4 bis 14 C-Atomen bedeuten und t eine ganze Zahl von 1 bis 10 ist, insbesondere ausgewählt aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropoxysilan.

12. Zusammensetzung nach einem der vorstehenden Ansprüche, **dadurch gekennzeichnet, dass** die Zusammensetzung eine Organosiliconverbindung enthält.

13. Zusammensetzung nach Anspruch 11, **dadurch gekennzeichnet, dass** die Organosiliconverbindung eine alpha,omega-dihydroxyl-terminierte Polyorganosiloxanverbindung ist, insbesondere ein alpha,omega-dihydroxyl-terminiertes Polydialkylsiloxan.

14. Dichtungsmittel, Klebstoff, Vergussmassen oder Beschichtungsmittel enthaltend eine Zusammensetzung gemäß einem der Ansprüche 1 bis 13.

15. Verwendung einer Zusammensetzung nach einem der Ansprüche 1 bis 13 als Dichtungsmittel, Klebstoff, Vergussmassen oder Beschichtungsmittel.

16. Verwendung eines Haftvermittlers, der die allgemeine Strukturformel (III) 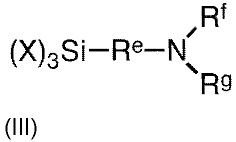 aufweist,
wobei
R^{e} -(CH₂)ₛ- bedeutet, wobei s eine ganze Zahl von 1 bis 10 ist, R^{f} H, eine optional substituierte C1- bis C16-Alkylgruppe oder Rⁱ bedeutet, R^{g} eine optional substituierte C2- bis C16-Alkylgruppe, Rⁱ oder -C(O)-R^{h} bedeutet,
wobei R^{f} nur H bedeutet, wenn R^{g} -C(O)-R^{h} bedeutet, und
wobei R^{h} eine optional substituierte, geradkettige oder verzweigte C1- bis C16-Alkoxygruppe, -O-Rⁱ, eine optional substituierte, geradkettige oder verzweigte C1- bis C16-Alkylgruppe, Rⁱ oder -CHMe-O-C(O)-Me bedeutet,
oder wobei R^{f} und R^{g} zusammen mit dem Atom, an das sie gebunden sind, ein optional substituiertes, heterocyclisches Ringsystem mit 3 bis 14 C-Atomen und 1 bis 5 Heteroatomen, ausgewählt aus der Gruppe bestehend aus N und O bilden, und
jeder Rⁱ unabhängig voneinander ein optional substituiertes cyclisches Ringsystem mit 4 bis 14 C-Atomen oder eine optional substituierte aromatische Gruppe mit 4 bis 14 C-Atomen bedeutet,
oder Oligomere oder Polymere der Strukturformel (III),
als Haftvermittler in Silikonkautschukmassen.

17. Verwendung nach Anspruch 16, **dadurch gekennzeichnet, dass** der Haftvermittler ausgewählt ist aus der Gruppe bestehend aus N-Methyl(3-(trimethoxysilyl)-propyl)-carbamat, N-Ethyl(3-(triethoxysilyl)-propyl)-carbamat, Trimethoxypropylsilylacetoxypropionsäureamid, Diethylaminopropyltrimethoxysilan, Dipropylaminopropyltrimethoxysilan und Dibutylaminotrimethoxysilan, vorzugsweise worin die Zusammensetzung einen weiteren Haftvermittler mit der allgemeinen Strukturformel (R^{#}O)₃Si(CH₂)ₜNR^{y}R^{z} enthält, wobei R^{#}, R^{y} und R^{z} unabhängig voneinander eine optional substituierte, geradkettige oder verzweigte C1- bis C16-Alkylgruppe, ein optional substituiertes cyclisches Ringsystem mit 4 bis 14 C-Atomen oder eine optional substituierte aromatische Gruppe mit 4 bis 14 C-Atomen bedeuten und t eine ganze Zahl von 1 bis 10 ist, oder wobei der weitere Haftvermittler insbesondere ausgewählt ist aus der Gruppe bestehend aus Dimethylaminopropyltrimethoxysilan, Dimethylaminopropyltriethoxysilan, Dimethylaminopropyltripropoxysilan, Diethylaminopropyltrimethoxysilan, Diethylaminopropyltriethoxysilan, Diethylaminopropyltripropoxysilan, Dipropylaminopropyltrimethoxysilan, Dipropylaminopropyltriethoxysilan, Dipropylaminopropyltripropoxysilan, Dibutylaminopropyltrimethoxysilan, Dibutylaminopropyltriethoxysilan und Dibutylaminopropyltripropoxysilan.

18. Verbindung mit der Strukturformel (IV)

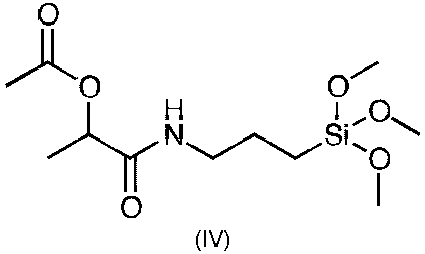

## Claims

1. Composition containing
a. A curing agent for silicone rubber masses comprising a compound having the general structural formula R¹ₘSi(R)₄₋ₘ,
wherein
each R¹ independently is an optionally substituted straight-chain or branched C1 to C16 alkyl group, an optionally substituted straight-chain or branched C2 to C16 alkenyl group or an optionally substituted C4 to C14 aryl group,
m is an integer from 0 to 2,
each R is independently selected from the group consisting of
- a hydroxycarboxylic acid ester residue having the general structural formula (I): 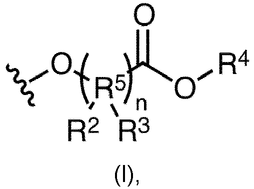 wherein
each R² independently represents H or an optionally substituted straight-chain or branched C1 to C16 alkyl group or a C4 to C14 aryl group,
each R³ independently represents H or an optionally substituted straight-chain or branched C1 to C16 alkyl group or a C4 to C14 aryl group,
R⁴ is an optionally substituted, straight-chain or branched C1 to C16 alkyl group, a C4 to C14 cycloalkyl group, a C5 to C15 aralkyl group or a C4 to C14 aryl group,
R⁵ is C or an optionally substituted saturated or partially unsaturated cyclic ring system having 4 to 14 C atoms or an optionally substituted aromatic group having 4 to 14 C atoms, and
n is an integer from 1 to 10,
- -O-C(O)-R⁶, wherein R⁶ is H, a C1 to C16 alkyl group, a C4 to C14 cycloalkyl group or a C4 to C14 aryl group, and
- -O-N=CR⁷R⁸, wherein R⁷ and R⁸ are independently H, a C1 to C16 alkyl group, a C4 to C14 cycloalkyl group or a C4 to C14 aryl group,
and
b. an adhesion promoter which has the general structural formula (II) or (III), 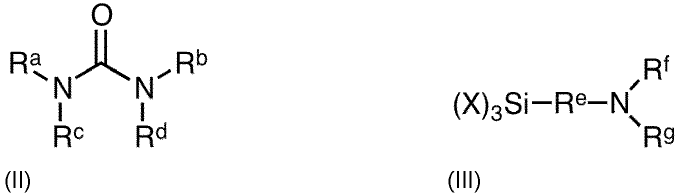 wherein
R^{a} represents an optionally substituted straight-chain or branched chain C1 to C16 alkyl group or -(CH₂)ₗ-Si(X)₃, wherein I is an integer from 1 to 10,
R^{b} is -(CH₂)ₒ-Si(X)₃ or R^{k}-N(C(O)-NH-(CH₂)ₚ-Si(X)₃)-R^{k}-NH-C(O)-NH-(CH₂)_{q-}Si(X)₃, wherein each R^{k} is independently -(CH₂)ᵣ-, o is an integer from 1 to 10, r is an integer from 1 to 8, in particular 2, and p and q are independently an integer from 1 to 10, each R^{c} and R^{d} is independently H, an optionally substituted straight-chain or branched C1 to C16 alkyl group or Rⁱ, or R^{c} and R^{d} together with the atoms to which they are attached and the carbonyl group enclosed between these atoms form a 5 to 8 membered ring containing 1 to 4 heteroatoms selected from the group consisting of N, O and S, and form 1 to 4 carbonyl groups, the ring being optionally substituted with a further R^{a}
each X is independently selected from the group consisting of -OMe, -OEt, -OⁱPr, -OⁿPr, -OⁿBu, -O^{sec}Bu, -O^{iso}Bu, -O^{t}Bu, -OPh and R, wherein R is as defined in a.,
R^{e} is -(CH₂)ₛ-, wherein s is an integer of 1 to 10,
R^{f} is H, an optionally substituted C1 to C16 alkyl group or Rⁱ,
R^{g} is an optionally substituted C2 to C16 alkyl group, Rⁱ or -C(O)-R^{h},
wherein R^{f} is H only when R^{g} is -C(O)-R^{h}, and
wherein R^{h} is an optionally substituted straight-chain or branched C1 to C16 alkoxy group, -O-Rⁱ, an optionally substituted straight-chain or branched C1 to C16 alkyl group, Rⁱ or -CHMe-O-C(O)-Me,
or wherein R^{f} and R^{g} together with the atom to which they are attached form an optionally substituted heterocyclic ring system having 3 to 14 C atoms and 1 to 5 heteroatoms selected from the group consisting of N and O, and
each Rⁱ independently is an optionally substituted cyclic ring system having 4 to 14 carbon atoms or an optionally substituted aromatic group having 4 to 14 carbon atoms, or oligomers or polymers of structural formulas (II) and (III).

2. Composition at least comprising a mixture obtainable by mixing at least one hardener according to claim 1 a. with at least one adhesion promoter according to claim 1 b.

3. Composition according to claim 1 or 2, **characterized in that** R^{c} and R^{d} are independently H or a straight-chain or branched C1 to C8 alkyl group or R^{c} and R^{d} together with the atoms to which they are bonded and the carbonyl group enclosed between these atoms form a 6-membered ring with 1 to 4, in particular 3 heteroatoms selected from the group consisting of N, O and S, in particular N, and 1 to 4, in particular 3 carbonyl groups, the ring being in particular substituted with a further R^{a}
and/or
R^{a} is -(CH₂)ₗ-Si(X)₃, wherein I and X are defined according to claim 1 and/or R^{f} is H or an optionally substituted straight-chain or branched C1 to C16 alkyl group and/or R^{g} is an optionally substituted straight-chain or branched C2 to C16 alkyl group or -C(O)-R^{h}, in particular -C(O)-R^{h}, and/or R^{h} is an optionally substituted straight-chain or branched C1 to C16 alkoxy group, an optionally substituted straight-chain or branched C1 to C16 alkyl group or -CHMe-O-C(O)-Me, wherein R^{f} is H only when R^{g} is -C(O)-R^{h}.

4. Composition according to one of the preceding claims, **characterized in that** the composition contains less than 5% by weight, in particular less than 4% by weight or less than 3% by weight or less than 2% by weight or less than 1% by weight or less than 0.5% by weight, in each case based on the total weight of the composition, of compounds having -NHR^{x} groups, wherein R^{x} is H or a C1 to C10 alkyl group, in particular a straight-chain C1 to C4 alkyl group, or a C4 to C10 cycloalkyl group or a C4 to C12 aryl group,
and/or
the adhesion promoter is selected from the group consisting of N-methyl(3-(trimethoxysilyl)propyl) carbamate, N-ethyl(3-(triethoxysilyl)propyl) carbamate, trimethoxypropylsilylacetoxypropionic acid amide, N, N'-bis(trimethoxysilylpropyl)urea, tris(triethoxysilylpropyl)diethylene triurea, 1,3,5-tris(trimethoxysilylpropyl)isocyanurate, diethylaminopropyltrimethoxysilane, dipropylaminopropyltrimethoxysilane and dibutylaminotrimethoxysilane,
and/or
the composition comprises a further adhesion promoter according to one of claims 1 to 3 or having the general structural formula (R^{#}O)₃Si(CH₂)ₜNR^{y}R^{z}, wherein R^{#}, R^{y} and R^{z} are independently an optionally substituted, straight-chain or branched C1 to C16 alkyl group, an optionally substituted cyclic ring system having 4 to 14 C atoms or an optionally substituted aromatic group having 4 to 14 C atoms and t is an integer from 1 to 10, especially selected from the group consisting of dimethylaminopropyltrimethoxysilane, dimethylaminopropyltriethoxysilane, dimethylaminopropyltripropoxysilane, diethylaminopropyltrimethoxysilane, diethylaminopropyltriethoxysilane, diethylaminopropyltripropoxysilane, dipropylaminopropyltrimethoxysilane, dipropylaminopropyltriethoxysilane, dipropylaminopropyltripropoxysilane, dibutylaminopropyltrimethoxysilane, dibutylaminopropyltriethoxysilane and dibutylaminopropyltripropoxysilane.

5. Composition according to any of the preceding claims, **characterized in that** in the general structural formula R¹ₘSi(R)₄₋ₘ R is a hydroxycarboxylic acid ester residue having the general structural formula (I) 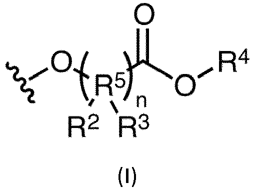 wherein R², R³, R⁴, R⁵ and n are defined according to claim 1,
and/or
in the general structural formula R¹ₘSi(R)₄₋ₘ each R¹ independently is an optionally substituted, straight-chain or branched C1 to C12 alkyl group, in particular an optionally substituted, straight-chain or branched C1 to C8 alkyl group, or an optionally substituted, straight-chain or branched C2 to C12 alkenyl group, in particular an optionally substituted, straight-chain or branched C2 to C8 alkenyl group, or an optionally substituted C4 to C10 aryl group.

6. Composition according to any of the preceding claims, **characterized in that** in the general structural formula R¹ₘSi(R)₄₋ₘ each R¹ independently is a methyl, ethyl, propyl, vinyl, phenyl or allyl radical,
and/or
in the hydroxycarboxylic acid ester residue each R² and R³ independently are H or an optionally substituted, straight-chain or branched C1 to C12 alkyl group, in particular an optionally substituted, straight-chain or branched C1 to C8 alkyl group,
and/or
in the hydroxycarboxylic acid ester residue each R² and R³ are independently selected from the group consisting of H, methyl, ethyl, propyl, isopropyl, butyl, n-butyl, sec-butyl, iso-butyl and tert-butyl, in particular from the group consisting of H and methyl.

7. Composition according to one of the preceding claims, **characterized in that** in the hydroxycarboxylic ester residue, R⁴ means an optionally substituted, straight-chain or branched C1 to C12 alkyl group, in particular an optionally substituted, straight-chain or branched C1 to C8 alkyl group, a C4 to C10 cycloalkyl group, a C5 to C11 aralkyl group or a C4 to C10 aryl group,
and/or
in the hydroxycarboxylic acid ester residue, R⁴ is selected from the group consisting of phenyl, tolyl, naphthyl, benzyl, cyclohexyl, methyl, ethyl, propyl, isopropyl, butyl, n-butyl, sec-butyl, iso-butyl, tert-butyl, pentyl, n-pentyl, sec-pentyl, 3-pentyl, 2-methylbutyl, iso-pentyl, 3-methylbut-2-yl, 2-methylbut-2-yl, neopentyl, hexyl, heptyl, octyl, ethylhexyl, and 2-ethylhexyl,
and/or
in the hydroxycarboxylic acid ester radical, R⁵ is a divalent benzene radical or R⁵ C and R² and R³ are H or R⁵ C and R² H and R³ methyl-,
and/or
in the hydroxycarboxylic acid ester radical, n is an integer from 1 to 5, in particular from 1 to 3, in particular 1.

8. Composition according to any of the preceding claims, **characterized in that** in the general structural formula R^{1m}Si(R)₄₋ₘ, R is selected from the group consisting of a glycolic acid ester residue, a lactic acid ester residue and a salicylic acid ester residue, wherein each R⁴ is an optionally substituted, straight-chain or branched C1 to C16 alkyl group, in particular an optionally substituted, straight-chain or branched C1 to C12 or C1 to C8 alkyl group, a C4 to C14 cycloalkyl group, in particular a C4 to C10 cycloalkyl group, a C5 to C15 aralkyl group, in particular a C5 to C11 aralkyl group, or a C4 to C14 aryl group, in particular a C4 to C10 aryl group,
and/or
R⁴ is selected from the group consisting of phenyl-, tolyl-, naphthyl-, benzyl-, cyclohexyl-, methyl-, ethyl-, propyl-, isopropyl-, butyl-, n-butyl-, sec-butyl-, iso-butyl-, tert-butyl-, pentyl, n-pentyl, sec-pentyl, 3-pentyl, 2-methylbutyl, iso-pentyl, 3-methylbut-2-yl, 2-methylbut-2-yl, neopentyl, hexyl, heptyl, octyl, ethylhexyl, and 2-ethylhexyl.

9. Composition according to claim 8 **characterized in that** the hardener is selected from the group consisting of tris(methylsalicylato)vinylsilane, tris(ethylsalicylato)vinylsilane, tris(ethylhexylsalicylato)vinylsilane, tris(2-ethylhexylsalicylato)vinylsilane, tris(isopropylsalicylato)vinylsilane, Tris(methylsalicylato)methylsilane, tris(ethylsalicylato)methylsilane, tris(ethylhexylsalicylato)methylsilane, tris(2-ethylhexylsalicylato)methylsilane, Tris(ethylsalicylato)propylsilane, tris(ethylhexylsalicylato)propylsilane, tris(2-ethylhexylsalicylato)propylsilane, tris(isopropylsalicylato)propylsilane, Tris(methylsalicylato)ethylsilane, tris(ethylsalicylato)ethylsilane, tris(ethylhexylsalicylato)ethylsilane, tris(2-ethylhexylsalicylato)ethylsilane, tris(isopropylsalicylato)ethylsilane, Tris(methylsalicylato)phenylsilane, tris(ethylsalicylato)phenylsilane, tris(ethylhexylsalicylato)phenylsilane, tris(2-ethylhexylsalicylato)phenylsilane, tris(isopropylsalicylato)phenylsilane, Tetra(ethylhexylsalicylato)silane, tetra(2-ethylhexylsalicylato)silane, tetra(methylsalicylato)silane, tetra(isopropylsalicylato)silane, tetra(ethylsalicylato)silane and mixtures thereof.

10. Composition according to one of the preceding claims, **characterized in that** the hardener additionally contains a compound with the general structural formula R⁹ᵤSi(R)₄₋ᵤ, wherein each R⁹ independently is an optionally substituted, straight-chain or branched C1 to C16 alkyl group, an optionally substituted, straight-chain or branched C2 to C16 alkenyl group or an optionally substituted C4 to C14 aryl group, in particular a methyl group, R is defined according to one of claims 1 to 9 and u is an integer from 0 to 2.

11. Composition containing
a. a curing agent for silicone rubber compositions comprising a compound having the general structural formula R¹ₘSi(R)₄₋ₘ, wherein m is an integer from 0 to 2 and each R¹ and R is independently defined according to one of claims 1 or 5 to 8 or the curing agent is a curing agent according to one of claims 9 or 10,
b. a first adhesion promoter which has the general structural formula (II) or (III) 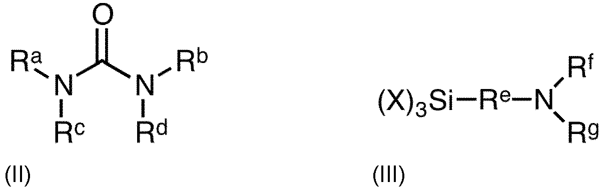 wherein R^{a}, R^{b}, R^{c}, R^{d}, R^{e}, R^{f}, R^{g}, R^{h}, Rⁱ and R^{k} are defined according to any one of claims 1 to 3 or the first adhesion promoter is an adhesion promoter according to claim 4
and
c. a second adhesion promoter with the general structural formula (R^{#}O)₃Si(CH₂)ₜNR^{y}R^{z}, wherein R^{#}, R^{y} and R^{z} independently are an optionally substituted, straight-chain or branched C1 to C16 alkyl group, an optionally substituted cyclic ring system with 4 to 14 C atoms or an optionally substituted aromatic group with 4 to 14 C atoms and t is an integer from 1 to 10, especially selected from the group consisting of dimethylaminopropyltrimethoxysilane, dimethylaminopropyltriethoxysilane, dimethylaminopropyltripropoxysilane, diethylaminopropyltrimethoxysilane, diethylaminopropyltriethoxysilane, Diethylaminopropyltripropoxysilane, dipropylaminopropyltrimethoxysilane, dipropylaminopropyltriethoxysilane, dipropylaminopropyltripropoxysilane, dibutylaminopropyltrimethoxysilane, dibutylaminopropyltriethoxysilane and dibutylaminopropyltripropoxysilane.

12. Composition according to one of the preceding claims, **characterized in that** the composition contains an organosilicone compound.

13. A composition according to claim 11, **characterized in that** the organosilicone compound is an alpha,omega-dihydroxyl terminated polyorganosiloxane compound, in particular an alpha,omega-dihydroxyl terminated polydialkylsiloxane.

14. A sealant, adhesive, potting compound or coating composition comprising a composition according to any one of claims 1 to 13.

15. Use of a composition according to one of claims 1 to 13 as sealant, adhesive, potting compound or coating composition.

16. Use of an adhesion promoter having the general structural formula (III), 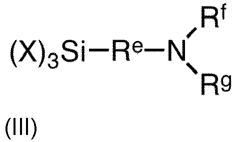 wherein
R^{e} is -(CH₂)ₛ-, wherein s is an integer of 1 to 10,
R^{f} is H, an optionally substituted C1 to C16 alkyl group or Rⁱ,
R^{g} is an optionally substituted C2 to C16 alkyl group, Rⁱ or -C(O)-R^{h},
where R^{f} is only H when R^{g} is -C(O)-R^{h}, and
wherein R^{h} represents an optionally substituted straight-chain or branched C1 to C16 alkoxy group, -O-Rⁱ, an optionally substituted straight-chain or branched C1 to C16 alkyl group, Rⁱ or -CHMe-O-C(O)-Me,
or wherein R^{f} and R^{g} together with the atom to which they are attached form an optionally substituted heterocyclic ring system having 3 to 14 C atoms and 1 to 5 heteroatoms selected from the group consisting of N and O, and
each Rⁱ independently is an optionally substituted cyclic ring system having from 4 to 14 carbon atoms or an optionally substituted aromatic group having from 4 to 14 carbon atoms,
or oligomers or polymers of structural formula (III),
as adhesion promoter in silicone rubber compounds.

17. Use according to claim 16, **characterized in that** the adhesion promoter is selected from the group consisting of N-methyl(3-(trimethoxysilyl)propyl) carbamate, N-ethyl(3-(triethoxysilyl)propyl) carbamate, Trimethoxypropylsilylacetoxypropionic acid amide, diethylaminopropyltrimethoxysilane, dipropylaminopropyltrimethoxysilane and dibutylaminotrimethoxysilane, preferably wherein the composition contains a further adhesion promoter having the general structural formula (R^{#}O)₃Si(CH₂)ₜNR^{y}R^{z}, wherein R^{#}, R^{y} and R^{z} independently are an optionally substituted, straight-chain or branched C1 to C16 alkyl group, an optionally substituted cyclic ring system having 4 to 14 C atoms or an optionally substituted aromatic group having 4 to 14 C atoms and t is an integer from 1 to 10, or wherein the further adhesion promoter is in particular selected from the group consisting of dimethylaminopropyltrimethoxysilane, Dimethylaminopropyltriethoxysilane, dimethylaminopropyltripropoxysilane, diethylaminopropyltrimethoxysilane, diethylaminopropyltriethoxysilane, diethylaminopropyltripropoxysilane, dipropylaminopropyltrimethoxysilane, dipropylaminopropyltriethoxysilane, dipropylaminopropyltripropoxysilane, dibutylaminopropyltrimethoxysilane, dibutylaminopropyltriethoxysilane and dibutylaminopropyltripropoxysilane.

18. A compound having the structural formula (IV)

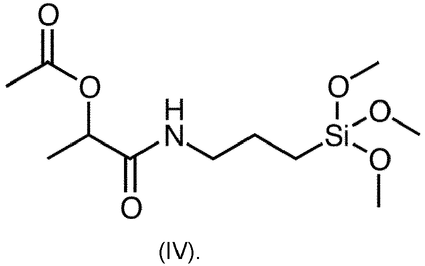

## Revendications

1. Composition contenant
a. un agent durcissant pour des masses de caoutchouc de silicone, contenant un composé de formule structurelle générale R¹ₘSi(R)₄₋ₘ,
dans laquelle
chaque R¹ représente indépendamment un groupe alkyle en C1 à C16 linéaire ou ramifié éventuellement substitué, un groupe alcényle en C2 à C16 linéaire ou ramifié éventuellement substitué ou un groupe aryle en C4 à C14 éventuellement substitué,
m est un nombre entier de 0 à 2,
chaque R est choisi indépendamment dans le groupe constitué par
- un résidu d'ester d'acide hydroxycarboxylique de formule structurelle générale (I): 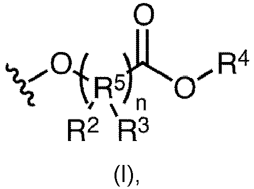 dans laquelle
chaque R² représente indépendamment H ou un groupe alkyle en C1 à C16 linéaire ou ramifié éventuellement substitué ou un groupe aryle en C4 à C14,
chaque R³ représente indépendamment H ou un groupe alkyle en C1 à C16 linéaire ou ramifié éventuellement substitué ou un groupe aryle en C4 à C14,
R⁴ représente un groupe alkyle en C1 à C16 linéaire ou ramifié éventuellement substitué, un groupe cycloalkyle en C4 à C14, un groupe aralkyle en C5 à C15 ou un groupe aryle en C4 à C14,
R⁵ représente C ou un système cyclique saturé ou partiellement insaturé éventuellement substitué de 4 à 14 atomes de C ou un groupe aromatique éventuellement substitué de 4 à 14 atomes de C, et
n est un nombre entier de 1 à 10,
- -O-C(O)-R⁶, où R⁶ représente H, un groupe alkyle en C1 à C16, un groupe cycloalkyle en C4 à C14 ou un groupe aryle en C4 à C14 et
- -O-N=CR⁷R⁸, où R⁷ et R⁸ représentent indépendamment H, un groupe alkyle en C1 à C16, un groupe cycloalkyle en C4 à C14 ou un groupe aryle en C4 à C14,
et
b. un agent d'adhérence qui présente la formule structurelle générale (II) ou (III) 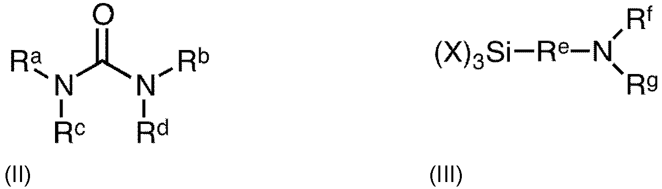 dans laquelle
R^{a} représente un groupe alkyle en C1 à C16 linéaire ou ramifié éventuellement substitué ou -(CH₂)ₗ-Si(X)₃, où I est un nombre entier de 1 à 10,
R^{b} représente -(CH₂)ₒ-Si(X)₃ ou R^{k}-N(C(O)-NH-(CH₂)ₚ-Si(X)₃)-R^{k}-NH-C(O)-NH-(CH₂)_{q}-Si(X)₃, où chaque R^{k} représente indépendamment -(CH₂)ᵣ-, o est un nombre entier de 1 à 10, r est un nombre entier de 1 à 8, en particulier 2, et p et q sont indépendamment l'un de l'autre un nombre entier de 1 à 10,
R^{c} et R^{d} représentent indépendamment l'un de l'autre H, un groupe alkyle en C1 à C16 linéaire ou ramifié éventuellement substitué ou Rⁱ, ou R^{c} et R^{d} forment ensemble avec les atomes auxquels ils sont liés et le groupe carbonyle inclus entre ces atomes un cycle de 5 à 8 chaînons comportant 1 à 4 hétéroatomes choisis dans le groupe constitué par N, O et S et 1 à 4 groupes carbonyle, le cycle étant éventuellement substitué par un autre R^{a},
chaque X est choisi indépendamment dans le groupe constitué par -OMe, -OEt, -OⁱPr, -OⁿPr, -OⁿBu, -O^{sec}Bu, -O^{iso}Bu, -O^{t}Bu, -OPh et R, où R est tel que défini sous a.,
R^{e} représente -(CH₂)ₛ-, où s est un nombre entier de 1 à 10,
R^{f} représente H, un groupe alkyle en C1 à C16 éventuellement substitué ou Rⁱ, R^{g} représente un groupe alkyle en C2 à C16 éventuellement substitué, Rⁱ ou - C(O)-R^{h},
où R^{f} représente H seulement lorsque R^{g} représente -C(O)-R^{h}, et
où R^{h} représente un groupe alcoxy en C1 à C16 linéaire ou ramifié éventuellement substitué, -O-Rⁱ, un groupe alkyle en C1 à C16 linéaire ou ramifié éventuellement substitué, Rⁱ ou -CHMe-O-C(O)-Me,
ou dans laquelle R^{f} et R^{g} forment, avec l'atome auquel ils sont liés, un système cyclique hétérocyclique éventuellement substitué contenant 3 à 14 atomes de C et 1 à 5 hétéroatomes choisis dans le groupe constitué par N et O, et
chaque Rⁱ représente indépendamment un système cyclique éventuellement substitué de 4 à 14 atomes de C ou un groupe aromatique éventuellement substitué de 4 à 14 atomes de C,
ou des oligomères ou polymères des formules structurelles (II) et (III).

2. Composition contenant au moins un mélange pouvant être obtenu en mélangeant au moins un agent durcissant selon la revendication 1 a. avec au moins un agent d'adhérence selon la revendication 1 b.

3. Composition selon la revendication 1 ou 2, **caractérisée en ce que** R^{c} et R^{d} représentent indépendamment l'un de l'autre H ou un groupe alkyle en C1 à C8 linéaire ou ramifié ou R^{c} et R^{d} forment, avec les atomes auxquels ils sont liés et le groupe carbonyle inclus entre ces atomes, un cycle à 6 chaînons comportant 1 à 4, en particulier 3, hétéroatomes choisis dans le groupe constitué par N, O et S, en particulier N, et 1 à 4, en particulier 3, groupes carbonyle, le cycle étant substitué en particulier par un autre R^{a}
et/ou
R^{a} représente -(CH₂)ₗ-Si(X)₃, où I et X sont définis selon la revendication 1 et/ou R^{f} représente H ou un groupe alkyle en C1 à C16 linéaire ou ramifié éventuellement substitué et/ou R^{g} représente un groupe alkyle en C2 à C16 linéaire ou ramifié éventuellement substitué ou -C(O)-R^{h}, en particulier -C(O)-R^{h}, et/ou R^{h} représente un groupe alcoxy en C1 à C16 linéaire ou ramifié éventuellement substitué, un groupe alkyle en C1 à C16 linéaire ou ramifié éventuellement substitué ou -CHMe-O-C(O)-Me, où R^{f} représente H seulement lorsque R^{g} représente -C(O)-R^{h}.

4. Composition selon l'une des revendications précédentes, **caractérisée en ce que** la composition contient moins de 5 % en poids, en particulier moins de 4 % en poids ou moins de 3 % en poids ou moins de 2 % en poids ou moins de 1 % en poids ou moins de 0,5 % en poids, dans chaque cas par rapport au poids total de la composition, de composés présentant des groupes -NHR^{x}, où R^{x} représente H ou un groupe alkyle en C1 à C10, en particulier un groupe alkyle en C1 à C4 linéaire, ou un groupe cycloalkyle en C4 à C10 ou un groupe aryle en C4 à C12,
et/ou
l'agent d'adhérence est choisi dans le groupe constitué par le N-méthyl(3-(triméthoxysilyl)propyl) carbamate, le N-éthyl(3-(triéthoxysilyl)propyl) carbamate, l'amide d'acide triméthoxypropylsilylacétoxypropionique, la N, N'-bis(triméthoxysilylpropyl)urée, la tris(triéthoxysilylpropyl)diéthylène triurée, le 1,3,5-tris(triméthoxysilylpropyl)isocyanurate, le diéthylaminopropyltriméthoxysilane, le dipropylaminopropyltriméthoxysilane et le dibutylaminotriméthoxysilane,
et/ou
la composition contient un autre agent d'adhérence selon l'une des revendications 1 à 3 ou de formule structurelle générale (R^{#}O)₃Si(CH₂)ₜNR^{y}R^{z}, dans laquelle R^{#}, R^{y} et R^{z} représentent indépendamment les uns des autres un groupe alkyle en C1 à C16 linéaire ou ramifié éventuellement substitué, un système cyclique éventuellement substitué de 4 à 14 atomes de C ou un groupe aromatique éventuellement substitué de 4 à 14 atomes de C et t est un nombre entier de 1 à 10, en particulier choisi dans le groupe constitué par le diméthylaminopropyltriméthoxysilane, le diméthylaminopropyltriéthoxysilane, le diméthylaminopropyltripropoxysilane, le diéthylaminopropyltriméthoxysilane, le diéthylaminopropyltriéthoxysilane, le diéthylaminopropyltripropoxysilane, dipropylaminopropyltriméthoxysilane, le dipropylaminopropyltriéthoxysilane, dipropylaminopropyltripropoxysilane, le dibutylaminopropyltriméthoxysilane, dibutylaminopropyltriéthoxysilane et le dibutylaminopropyltripropoxysilane.

5. Composition selon l'une des revendications précédentes, **caractérisée en ce que** dans la formule structurelle générale R¹ₘSi(R)₄₋ₘ, R est un résidu d'ester d'acide hydroxycarboxylique de formule structurelle générale (I), 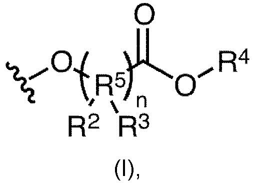 dans laquelle R², R³, R⁴, R⁵ et n sont tels que définis dans la revendication 1,
et/ou
dans la formule structurelle générale R¹ₘSi(R)₄₋ₘ, chaque R¹ représente indépendamment un groupe alkyle en C1 à C12 linéaire ou ramifié éventuellement substitué, en particulier un groupe alkyle en C1 à C8 linéaire ou ramifié éventuellement substitué, ou un groupe alcényle en C2 à C12 linéaire ou ramifié éventuellement substitué, en particulier un groupe alcényle en C2 à C8 linéaire ou ramifié éventuellement substitué, ou un groupe aryle en C4 à C10 éventuellement substitué.

6. Composition selon l'une des revendications précédentes, **caractérisée en ce que** dans la formule structurelle générale R¹ₘSi(R)₄₋ₘ, chaque R¹ représente indépendamment un résidu méthyle, éthyle, propyle, vinyle, phényle ou allyle,
et/ou
dans le résidu d'ester d'acide hydroxycarboxylique, chaque R² et R³ représente indépendamment l'un de l'autre H ou un groupe alkyle en C1 à C12 linéaire ou ramifié éventuellement substitué, en particulier un groupe alkyle en C1 à C8 linéaire ou ramifié éventuellement substitué,
et/ou
dans le résidu d'ester d'acide hydroxycarboxylique, chaque R² et R³ est choisi indépendamment de l'autre dans le groupe constitué par H, le méthyle, l'éthyle, le propyle, l'isopropyle, le butyle, le n-butyle, le sec-butyle, l'isobutyle et le tert-butyle, en particulier dans le groupe constitué par H et le méthyle.

7. Composition selon l'une des revendications précédentes, **caractérisée en ce que** dans le résidu d'ester hydroxycarboxylique, R⁴ représente un groupe alkyle en C1 à C12 linéaire ou ramifié éventuellement substitué, en particulier un groupe alkyle en C1 à C8 linéaire ou ramifié éventuellement substitué, un groupe cycloalkyle en C4 à C10, un groupe aralkyle en C5 à C11 ou un groupe aryle en C4 à C10,
et/ou
dans le résidu d'ester hydroxycarboxylique, R⁴ est choisi dans le groupe constitué par les groupes phényle, tolyle, naphtyle, benzyle, cyclohexyle, méthyle, éthyle, propyle, isopropyle, butyle, n-butyle, sec-butyle, iso-butyle, tert-butyle, pentyle, n-pentyle, sec-pentyle, 3-pentyle, 2-méthylbutyle, iso-pentyle, 3-méthylbut-2-yle, 2-méthylbut-2-yle, néopentyle, hexyle, heptyle, octyle, éthylhexyle et 2-éthylhexyle,
et/ou
dans le résidu d'ester hydroxycarboxylique, R⁵ est un résidu benzène divalent ou R⁵ représente C et R² et R³ représentent H ou R⁵ représente C et R² H et R³ représentent le méthyle,
et/ou
dans le résidu d'ester hydroxycarboxylique, n est un nombre entier de 1 à 5, en particulier de 1 à 3, en particulier 1.

8. Composition selon l'une des revendications précédentes, **caractérisée en ce que** dans la formule structurelle générale R¹ₘSi(R)₄₋ₘ, R est choisi dans le groupe constitué par un résidu d'ester d'acide glycolique, un résidu d'ester d'acide lactique et un résidu d'ester d'acide salicylique, dans laquelle chaque R⁴ représente un groupe alkyle en C1 à C16 linéaire ou ramifié éventuellement substitué, en particulier un groupe alkyle en C1 à C12 ou en C1 à C8 linéaire ou ramifié éventuellement substitué, un groupe cycloalkyle en C4 à C14, en particulier un groupe cycloalkyle en C4 à C10, un groupe aralkyle en C5 à C15, en particulier un groupe aralkyle en C5 à C11, ou un groupe aryle en C4 à C14, en particulier un groupe aryle en C4 à C10,
et/ou
R⁴ est choisi dans le groupe constitué par les groupes phényle, tolyle, naphtyle, benzyle, cyclohexyle, méthyle, éthyle, propyle, isopropyle, butyle, n-butyle, sec-butyle, iso-butyle, tert-butyle, pentyle, n-pentyle, sec-pentyle, 3-pentyle, 2-méthylbutyle, iso-pentyle, 3-méthylbut-2-yle, 2-méthylbut-2-yle, néopentyle, hexyle, heptyle, octyle, éthylhexyle et 2-éthylhexyle.

9. Composition selon la revendication 8, **caractérisée en ce que** l'agent durcissant est choisi dans le groupe constitué par le tris(méthylsalicylato)vinylsilane, le tris(éthylsalicylato)vinylsilane, le tris(éthylhexylsalicylato)vinylsilane, le tris(2-éthylhexylsalicylato)vinylsilane, le tris(isopropylsalicylato)vinylsilane, le tris(méthylsalicylato)méthylsilane, le tris(éthylsalicylato)méthylsilane, le tris(éthylhexylsalicylato)méthylsilane, le tris(2-éthylhexylsalicylato)méthylsilane, le tris(éthylsalicylato)propylsilane, le tris(éthylhexylsalicylato)propylsilane, le tris(2-éthylhexylsalicylato)propylsilane, le tris(isopropylsalicylato)propylsilane, le tris(méthylsalicylato)éthylsilane, le tris(éthylsalicylato)éthylsilane, le tris(éthylhexylsalicylato)éthylsilane, le tris(2-éthylhexylsalicylato)éthylsilane, le tris(isopropylsalicylato)éthylsilane, le tris(méthylsalicylato)phénylsilane, le tris(éthylsalicylato)phénylsilane, le tris(éthylhexylsalicylato)phénylsilane, le tris(2-éthylhexylsalicylato)phénylsilane, le tris(isopropylsalicylato)phénylsilane, le tétra(éthylhexylsalicylato)silane, le tétra(2-éthylhexylsalicylato)silane, le tétra(méthylsalicylato)silane, le tétra(isopropylsalicylato)silane, le tétra(éthylsalicylato)silane et leurs mélanges.

10. Composition selon l'une des revendications précédentes, **caractérisée en ce que** l'agent durcissant contient en outre un composé de formule générale R⁹ᵤSi(R)₄₋ᵤ, dans laquelle chaque R⁹ représente indépendamment un groupe alkyle en C1 à C16 linéaire ou ramifié éventuellement substitué, un groupe alcényle en C2 à C16 linéaire ou ramifié éventuellement substitué ou un groupe aryle en C4 à C14 éventuellement substitué, en particulier un groupe méthyle, R est défini selon l'une des revendications 1 à 9 et u est un nombre entier de 0 à 2.

11. Composition contenant
a. un agent durcissant pour des masses de caoutchouc de silicone, contenant un composé de formule structurelle générale R¹ₘSi(R)₄₋ₘ, dans laquelle m est un nombre entier de 0 à 2 et chaque R¹ et R est défini indépendamment selon l'une des revendications 1 ou 5 à 8 ou l'agent durcissant est un agent durcissant selon l'une des revendications 9 ou 10,
b. un premier agent d'adhérence qui présente la formule structurelle générale (II) ou (III) 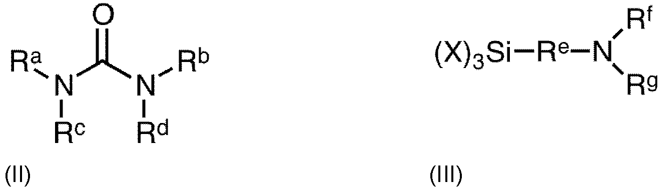 dans laquelle R^{a}, R^{b}, R^{c}, R^{d}, R^{e}, R^{f}, R^{g}, R^{h}, Rⁱ et R^{k} sont définis selon l'une des revendications 1 à 3 ou le premier agent d'adhérence est un agent d'adhérence selon la revendication 4
et
c. un deuxième agent d'adhérence de formule structurelle générale (R^{#}O)₃Si(CH₂)ₜNR^{y}R^{z}, dans laquelle R^{#}, R^{y} et R^{z} représentent indépendamment les uns des autres un groupe alkyle en C1 à C16 linéaire ou ramifié éventuellement substitué, un système cyclique éventuellement substitué de 4 à 14 atomes de C ou un groupe aromatique éventuellement substitué de 4 à 14 atomes de C et t est un nombre entier de 1 à 10, en particulier choisi dans le groupe constitué par le diméthylaminopropyltriméthoxysilane, le diméthylaminopropyltriéthoxysilane, le diméthylaminopropyltripropoxysilane, le diéthylaminopropyltriméthoxysilane, le diéthylaminopropyltriéthoxysilane, le diéthylaminopropyltripropoxysilane, le dipropylaminopropyltriméthoxysilane, le dipropylaminopropyltriéthoxysilane, le dipropylaminopropyltripropoxysilane, le dibutylaminopropyltriméthoxysilane, le dibutylaminopropyltriéthoxysilane et le dibutylaminopropyltripropoxysilane.

12. Composition selon l'une des revendications précédentes, **caractérisée en ce que** la composition contient un composé organosilicié.

13. Composition selon la revendication 11, **caractérisée en ce que** le composé organosilicié est un composé polyorganosiloxane à terminaison alpha,oméga-dihydroxyle, en particulier un polydialkylsiloxane à terminaison alpha,oméga-dihydroxyle.

14. Produit d'étanchéité, adhésif, masse de scellement ou produit de revêtement contenant une composition selon l'une des revendications 1 à 13.

15. Utilisation d'une composition selon l'une des revendications 1 à 13 comme produit d'étanchéité, adhésif, masse de scellement ou produit de revêtement.

16. Utilisation d'un agent d'adhérence qui présente la formule structurelle générale (III) 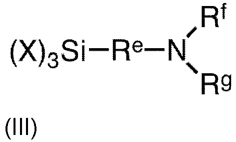 dans laquelle
R^{e} représente -(CH₂)ₛ-, où s est un nombre entier de 1 à 10,
R^{f} représente H, un groupe alkyle en C1 à C16 éventuellement substitué ou Rⁱ,
R^{g} représente un groupe alkyle en C2 à C16 éventuellement substitué, Rⁱ ou - C(O)-R^{h},
où R^{f} représente H seulement lorsque R^{g} représente -C(O)-R^{h}, et
où R^{h} représente un groupe alcoxy en C1 à C16 linéaire ou ramifié éventuellement substitué, -O-Rⁱ, un groupe alkyle en C1 à C16 linéaire ou ramifié éventuellement substitué, Rⁱ ou -CHMe-O-C(O)-Me,
ou dans laquelle R^{f} et R^{g} forment, avec l'atome auquel ils sont liés, un système cyclique hétérocyclique éventuellement substitué contenant 3 à 14 atomes de C et 1 à 5 hétéroatomes choisis dans le groupe constitué par N et O, et
chaque Rⁱ représente indépendamment un système cyclique éventuellement substitué de 4 à 14 atomes de C ou un groupe aromatique éventuellement substitué de 4 à 14 atomes de C,
ou des oligomères ou polymères de formule structurelle (III),
comme agent d'adhérence dans des masses de caoutchouc de silicone.

17. Utilisation selon la revendication 16, **caractérisée en ce que** l'agent d'adhérence est choisi dans le groupe constitué par le N-méthyl(3-(triméthoxysilyl)propyl)carbamate, le N-éthyl(3-(triéthoxysilyl)propyl)carbamate, l'amide d'acide triméthoxypropylsilylacétoxypropionique, le diéthylaminopropyltriméthoxysilane, le dipropylaminopropyltriméthoxysilane et le dibutylaminotriméthoxysilane, de préférence dans laquelle la composition contient un autre agent d'adhérence de formule structurelle générale (R^{#}O)₃Si(CH₂)ₜNR^{y}R^{z}, dans laquelle R^{#}, R^{y} et R^{z} représentent indépendamment les uns des autres un groupe alkyle en C1 à C16 linéaire ou ramifié éventuellement substitué, un système cyclique éventuellement substitué de 4 à 14 atomes de C ou un groupe aromatique éventuellement substitué de 4 à 14 atomes de C et t est un nombre entier de 1 à 10, ou dans laquelle l'autre agent d'adhérence est choisi en particulier dans le groupe constitué par le diméthylaminopropyltriméthoxysilane, le diméthylaminopropyltriéthoxysilane, le diméthylaminopropyltripropoxysilane, le diéthylaminopropyltriméthoxysilane, le diéthylaminopropyltriéthoxysilane, le diéthylaminopropyltripropoxysilane, le dipropylaminopropyltriméthoxysilane, le dipropylaminopropyltriéthoxysilane, le dipropylaminopropyltripropoxysilane, le dibutylaminopropyltriméthoxysilane, le dibutylaminopropyltriéthoxysilane et le dibutylaminopropyltripropoxysilane.

18. Composé de formule structurelle (IV)
